# EUROPÄISCHE PATENTANMELDUNG

(11) **EP 2 789 642 A1**
(43) Veröffentlichungstag der Anmeldung: **15.10.2014**
(21) Anmeldenummer: 14159327.7
(22) Anmeldetag: 13.03.2014
(51) Int. Cl.: C08G 77/46, D06M 15/647

(54) **Polysiloxan-Polyether-Copolymere mit Amino- und/oder quaternären Ammoniumgruppen im Polyetherteil und Verfahren zu deren Herstellung**

(30) Priorität: 09.04.2013 DE 102013206175
(71) Anmelder: Evonik Industries AG, 45128 Essen (DE)
(72) Erfinder: Jazkewitsch, Olga, 45131 Essen (DE); Schubert, Frank, 47506 Neukirchen-Vluyn (DE); Fiedel, Michael, 45131 Essen (DE); Koenig, Frank, 45884 Gelsenkirchen (DE); Kuppert, Dirk, 63739 Aschaffenburg (DE)

(57) **Zusammenfassung**

Polysiloxan-Polyether-Copolymere mit Amino- und/oder quaternären Ammoniumgruppen im Polyetherteil, Verfahren zu deren Herstellung aus Wasserstoffsiloxanen und chlorhaltigen ungesättigten Polyethern in einer Hydrosilylierungsreaktion mit nachgeschalteter Substitution von Chlor durch Amingruppen und Verwendung als Weichmacher für textile Flächengebilde.

## Beschreibung

Die Erfindung betrifft Polysiloxan-Polyether-Copolymere mit Amino- und/oder quaternären Ammoniumgruppen im Polyetherteil. Sie betrifft ferner Verfahren zu deren Herstellung aus Wasserstoffsiloxanen und chlorhaltigen ungesättigten Polyethern in einer Hydrosilylierungsreaktion mit nachgeschalteter Substitution von Chlor durch Amingruppen sowie die Verwendung dieser Polymere als Weichmacher für Flächengebilde wie beispielsweise Gewebe, insbesondere textiles Gewebe, Tissue, Non-wovens und/oder Fasern aus natürlichen und/oder synthetischen Rohstoffen und/oder Leder, Haar oder Fell sowie deren Verwendung in kosmetischen Anwendungen wie beispielsweise in der Haar-, Haut- und Körperpflege.

Weichmacher für Flächengebilde, wie beispielsweise Gewebe, textile Gewebe, Gewirke, Gestricke, Non-wovens und/oder Fasern aus natürlichen und/oder synthetischen Rohstoffen sind Stoffe, die den genannten Materialien einen weichen geschmeidigen Griff verleihen. Meist werden Polysiloxane mit quaternären Ammoniumgruppen verwendet. Über elektrostatische Anziehungskräfte verankern die ionischen Gruppen das Siloxan auf der Faser. Auf diese Weise wird die Reibung verringert und der gewünschte Weichmachereffekt erreicht. Trägt man das Siloxan in Form von Mikroemulsionen auf, kann es zudem in die Faser eindringen und verleiht ihr innere Weichheit und Fülle.

Für die Pflege geschädigter Haare gibt es spezielle Zubereitungen, wie Haarspülungen, Haarkuren, Shampoos, Leave-On Konditionierer usw., die vor allem die Kämmbarkeit, den Griff und den Glanz geschädigter Haare verbessern.

Es besteht daher also ein Bedarf an vielseitig einsetzbaren Wirkstoffen für die Textil- und Körperpflege.

Im Rahmen dieser Erfindung umfasst der Begriff Polyether sowohl Polyether, Polyetherole und auch Polyetheralkohole, die gegebenenfalls synonym zueinander verwendet werden. Dabei ist nicht erforderlich, dass der Ausdruck "poly" damit einhergehen muss, dass es sich um eine Vielzahl von Etherfunktionalitäten oder Alkoholfunktionalitäten im Molekül oder Polymer handelt. Vielmehr wird dadurch nur angedeutet, dass zumindest Wiederholungseinheiten einzelner Monomerbausteine oder aber Zusammensetzungen vorliegen, die eine höhere Molmasse und zudem auch noch eine gewisse Polydispersität aufweisen.

Das Wortfragment "Poly" umfasst im Zusammenhang mit dieser Erfindung nicht nur ausschließlich Verbindungen mit zumindest 3 Wiederholungseinheiten eines oder mehrerer Monomere im Molekül, sondern insbesondere auch solche Zusammensetzungen von Verbindungen, die eine Molekulargewichtsverteilung aufweisen und dabei ein mittleres Molekulargewicht von mindestens 200 g/mol besitzen. Bei dieser Definition ist dem Umstand Rechnung getragen, dass es auf dem betrachteten Gebiet der Technik üblich ist, solche Verbindungen bereits als Polymere zu bezeichnen, auch wenn sie nicht einer Polymerdefinition analog der OECD- oder REACH-Richtlinien zu genügen scheinen.

Der Begriff Polysiloxan-Polyether-Copolymer wird synonym zu Polyethersiloxan und Siliconpolyether gebraucht.

Polysiloxane mit quaternären Ammoniumgruppen sind als Additive für Haarpflege bekannt. So werden zum Beispiel in DE 14 93 384, EP 0 017 122 und US 4,895,964 Strukturen beschrieben, bei denen Siloxane seitenständig mit statistisch über das Polymer verteilten Ammoniumgruppen modifiziert sind. Diese Verbindungen haben den Nachteil, dass sie keinen ausgeprägten Siliconcharakter besitzen und eine gute Wirksamkeit als Textilweichmacher nicht zu beobachten ist.

Einen deutlich stärker ausgeprägten Siliconcharakter haben dagegen kationische Silicone, wie sie in der EP 0 294 642 (US4891166) beschrieben werden. Die EP 0 294 642 beschreibt Strukturen, bei denen die quaternären Funktionen endständig an ein Siloxansegment gebunden sind. Wird ein Textil mit derartigen Verbindungen behandelt, so erhält es zwar einen guten Weichgriff, jedoch ist das Siloxan aufgrund seiner geringen Substantivität leicht wieder von dem entsprechendem Textil entfernbar, zum Beispiel durch Waschvorgänge. Im Gegensatz zum Haushaltsweichspüler ist es für die industrielle textile Endausrüstung jedoch wünschenswert, dass das Siloxan auch nach der Wäsche auf dem Textil verbleibt und der Weichgriff somit nicht verloren geht.

Den Aspekt einer erhöhten Hydrophilie adressierend, beanspruchen die WO1997/032917 (US 5,807,956 und US 5,981,681) nicht-hydrolysierbare Blockcopolymere des (AB)ₙA-Typs mit alternierenden Einheiten bestehend aus Polysiloxan und aminofunktionellem Polyether und einen Weg zu deren Herstellung. Hier werden durch Edelmetall-katalysierte Hydrosilylierung alpha,omega-Dihydrogenpolydimethylsiloxane mit Epoxidgruppen tragenden Olefinen über eine SiC-Bindung verknüpft und die so erhaltenen, Epoxy-terminierten Siloxane mit amino-terminierten Polyethern zur Umsetzung gebracht. Alternativ wird auch auf die hydrosilylierende Verknüpfung von alpha,omega-Dihydrogenpolydimethylsiloxanen mit epoxy-terminierten Allylpolyethern und die nachfolgende Umsetzung der so erhaltenen epoxy-funktionalisierten Siloxane mit Diaminen abgestellt.

Die Lehre der WO 2002/092904 (US6475568B1) bezieht sich auf Zusammensetzungen bestehend aus nicht-hydrolysierbaren, blockartigen Copolymeren, die keine (AB)ₙ-Struktur besitzen, die durch die Reaktion zwischen Epoxidgruppen aufweisenden Polydimethylsiloxanen A und Epoxidtermini tragenden Polyethern B in Gegenwart von primären Aminen und/oder Mischungen bestehend aus primären und sekundären Aminen gewonnen werden.

Dem Fachmann ist bekannt, dass die direkte hydrosilylierende Verknüpfung von Wasserstoffsiloxanen mit terminal C=C-Doppelbindungen aufweisenden, aminfunktionellen Polyethern auf Grund der Deaktivierung der technisch verfügbaren Edelmetall-Katalysatoren schwierig bis unmöglich ist, da Amingruppen das aktive Edelmetall-Komplexzentrum blockieren und somit zur Inhibierung des Katalysators führen (DE69318268T2, US5416147).

Der vorliegenden Erfindung liegt die Aufgabe zugrunde, neuartige Polysiloxan-Polyether-Copolymere zur Verfügung zu stellen, die zumindest einige Nachteile des Standes der Technik überwinden.

Überraschenderweise wurde gefunden, dass Polysiloxan-Polyether-Copolymere, die in ihrem Polyetherteil Amino- und/oder quaternäre Ammoniumgruppen tragen, diese Aufgabe lösen.

Gegenstand der Erfindung sind daher Polysiloxan-Polyether-Copolymere mit Amino- und/oder quaternären Ammoniumgruppen im Polyetherteil, deren Amino- und/oder quaternären Ammoniumgruppen über eine Methylengruppe direkt an einen Kohlenstoff der Polyalkoxylenkette gebunden sind.

Ein weiterer Gegenstand der Erfindung ist ein Verfahren zur Herstellung der erfindungsgemäßen Polysiloxan-Polyether-Copolymere mit Amino- und/oder quaternären Ammoniumgruppen im Polyetherteil.

Ebenfalls Gegenstand der Erfindung sind Zusammensetzungen enthaltend die erfindungsgemäßen Polysiloxan-Polyether-Copolymere mit Amino- und/oder quaternären Ammoniumgruppen im Polyetherteil.

Ein weiterer Gegenstand der Erfindung ist die Verwendung der erfindungsgemäßen Polysiloxan-Polyether-Copolymere mit Amino- und/oder quaternären Ammoniumgruppen im Polyetherteil sowie der erfindungsgemäßen Zusammensetzungen für die Textil- und Körperpflege.

Die erfindungsgemäßen Polysiloxan-Polyether-Copolymere, die in ihrem Polyetherteil Amino- und/oder quaternäre Ammoniumgruppen tragen, haben den Vorteil, dass diese Verbindungen gegebenenfalls keine Doppelbindungen enthalten, bevorzugt enthalten sie keine Methylidengruppen.

Ein Vorteil des erfindungsgemäßen Verfahrens ist, dass die Substitution der Chloratome durch Aminogruppen haltige Verbindungen ohne Eliminierung zu ungesättigten Verbindungen abläuft.

Ein weiterer Vorteil des erfindungsgemäßen Verfahrens ist die gute synthetische Zugänglichkeit einer Vielzahl gezielt determinierbarer Strukturen. Weiterhin vorteilhaft ist die Einstellbarkeit der Eigenschaftsprofile in weiten Grenzen.

Die erfindungsgemäßen Polysiloxan-Polyether-Copolymere mit Amino- und/oder quaternären Ammoniumgruppen im Polyetherteil, sind Verbindungen der allgemeinen Formel (1), 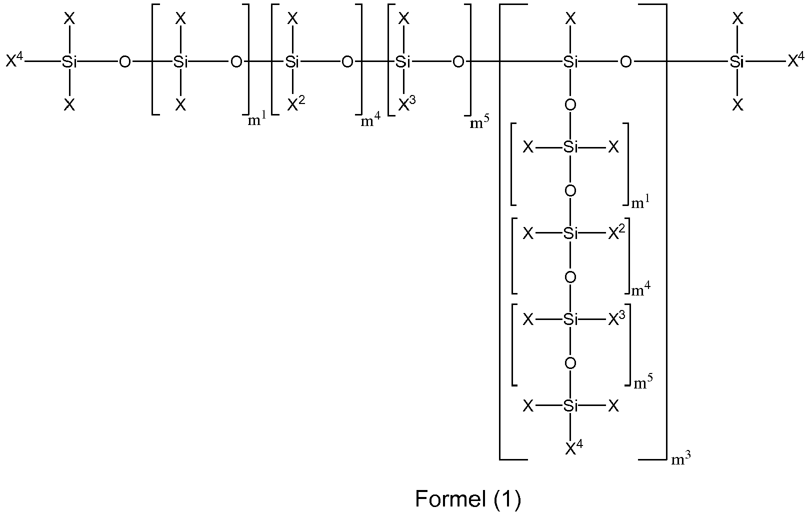 mit
- m1: von 0 bis 500, vorzugsweise von 10 bis 200, insbesondere 15 bis 100,
- m3: von 0 bis 30, vorzugsweise von größer 0 bis 15, insbesondere 1 bis 5,
- m4: von 0 bis 60, vorzugsweise von größer 0 bis 30, insbesondere von 1 bis 20,
- m5: von 0 bis 60, vorzugsweise von größer 0 bis 30, insbesondere von 1 bis 20,
mit der Maßgabe, dass die Summe der Indizes m1, m3, m4 und m5 mindestens gleich 1 ist,
- X: unabhängig voneinander ein linearer, cyclischer oder verzweigter, aliphatischer oder aromatischer, gesättigter oder ungesättigter Kohlenwasserstoffrest mit 1 bis 20 C-Atomen ist, der gegebenenfalls Heteroatome wie Sauerstoff, Stickstoff, Phosphor oder Schwefel enthalten kann, der vorzugsweise eine Methylgruppe ist,
- X4: wahlweise X, X2 und/oder X3 ist,
- X2: ein Polyetherrest der Formel (1a) ist

-CH₂-CH(Y)-(Z1)ₐ-O-(R¹)ₙ-(R²)ₒ-(R³)ₚ- R⁵ Formel (1a)

wobei
Y entweder Wasserstoff oder ein monovalenter und mindestens ein Kohlenstoffatom aufweisender organischer Rest, bevorzugt ist der organische Rest eine Alkylgruppe mit 1 bis 8 Kohlenstoffatomen, besonders bevorzugt eine Methylgruppe, bevorzugt ist der Rest Y Wasserstoff, Z1 ein divalenter gesättigter oder ungesättigter organischer Rest, bevorzugt eine lineare oder verzweigte Alkylengruppe mit 1 bis 30 Kohlenstoffatomen, besonders bevorzugt eine Methylen-, Ethylen-, Propylen- oder Butylengruppe ist, insbesondere bevorzugt eine Methylengruppe,
a gleich 0 oder 1, bevorzugt 1 ist,
n gleich 0 bis 200, bevorzugt größer als 0 bis 150, besonders bevorzugt 1 bis 100 ist,
o gleich 1 bis 1000, bevorzugt größer als 1 bis 800, mehr bevorzugt 5 bis 600, besonders bevorzugt 8 bis 500, mehr besonders bevorzugt 10 bis 400 und insbesondere bevorzugt 30 bis 100 ist,
p gleich 0 bis 200, bevorzugt größer 0 bis 150, besonders bevorzugt 1 bis 100 ist. mit der Maßgabe, dass die Summe der Indizes n + o + p mindestens gleich 3 ist,
R¹ = -CH₂CH₂O-
R² = -CH₂CH(CH₃)O- oder -CH(CH₃)CH₂O-
R³ = -CH₂CHRO- oder -CHRCH₂O-
R unabhängig voneinander eine Alkylgruppe mit 2-18 C-Atomen oder ein aromatischer Rest, insbesondere eine Ethyl-, Butylgruppe oder ein Phenylrest ist,
R⁵ = unabhängig voneinander Wasserstoff, eine Alkylgruppe mit 1-18 C-Atomen oder eine Gruppe, R_{E}-C(=O)- ist, bevorzugt eine Methylgruppe,
R_{E} unabhängig voneinander eine Alkylgruppe mit 1-17 C-Atomen oder ein aromatischer Rest, insbesondere eine Methyl-, eine Ethyl-, eine Propylgruppe oder ein Phenylrest ist,
- X3: ein Polyetherrest der Formel (1 b) ist

-CH₂-CH(Y)-(Z1)ₐ-O-(R¹)ₙ-(R²)ₒ-(R³)ₚ-(R⁴)_{q}-R⁵ Formel (1b)

wobei
q gleich 1 bis 50, bevorzugt größer 1 bis 30, insbesondere 2 bis 20 ist,
R⁴ = -CH₂CH(CH₂W)O- oder -CH(CH₂W)CH₂O- ist
und a, n, o, p, R¹, R², R³, R⁵, Y, Z1 die zuvor definierten Bedeutungen haben,
wobei W Chlor oder eine Stickstoff aufweisende Gruppe ist,
mit der Maßgabe, dass m5 mindestens 1 ist, wenn X4 ungleich X3 ist.

Bevorzugt ist W eine Gruppe, die über einen Stickstoff verbunden ist.

Mehr bevorzugt genügt W der Formel (6)

-NR^{N1}R^{N2} Formel (6)

mit R^{N1} und R^{N2} unabhängig voneinander Wasserstoff, ein linearer, cyclischer oder verzweigter, aliphatischer oder aromatischer, gesättigter oder ungesättigter Kohlenwasserstoffrest mit 1 bis 20 Kohlenstoffatomen, der gegebenenfalls ein oder mehrere Heteroatome enthalten kann, bevorzugte Kohlenwasserstoffe sind lineare Alkylreste mit 1 bis 20, bevorzugt 2 bis 8 und insbesondere bevorzugt mit 3 bis 5 Kohlenstoffatomen, wobei die Alkylreste durch Heteroatome unterbrochen sein können, wobei die Heteroatome vorzugsweise ausgewählt sind aus der Gruppe Sauerstoff, Stickstoff, Phosphor und Schwefel, bevorzugt aus Sauerstoff und Stickstoff, insbesondere sind die Heteroatome Stickstoff.

Bevorzugte Reste R^{N1} und R^{N2} sind Kohlenwasserstoffereste, die 1, 2, 3, 4, 5, 6, 7, 8, 9 oder 10 primäre, sekundäre und/oder tertiäre Amingruppen enthalten, bevorzugt 1 bis 5 und insbesondere bevorzugt 1 bis 3 Aminogruppen. Besonders bevorzugte Kohlenwasserstoffreste sind beispielsweise Methyl, Ethyl, Propyl, Butyl, Pentyl, Hexyl, 2-Ethylhexyl, Histamino, 2-Phenylethyl, 2-Aminoethyl, 3-Aminopropyl, 4-Aminobutyl, 5-Aminopentyl, 6-Aminohexyl, 2-(2-Aminoethyl)-aminoethyl (entsprechend dem Rest von Diethylentriamin), 2-(2-(2-Aminoethyl)-aminoethyl)-aminoethyl (entsprechend dem Rest von Triethylentetramin), 3-(3-(Dimethylamino)propyl) aminopropyl, 5-Diamino-2-methylpentyl, 3-(3-(Dimethylamino)hexyl) aminohexyl, 3-(Dimethylamino)propyl, N,N-Dimethylethyl, Hydroxyethyl, 2-Hydroxy-propyl, Bis(3-dimethylamino)propyl - reste.

Weiterhin bevorzugte lineare Kohlenwasserstoffe sind Alkylenreste mit 2 bis 8 Kohlenstoffatomen, die terminal mit Heteroatomen wie Stickstoff oder Sauerstoff substituiert ist, wobei die Alkylenreste bevorzugt Ethylen-, Propylen-, Butylen-, Pentylen,- Hexylen-, Heptylen oder Octylenreste sind, insbesodere bevorzugt Propylen, wobei die Heteroatome mit Alkylresten mit 1 bis 4 Kohlenstoffatomen substitituiert sein können, bevorzugt mit Methylresten subsitutiert sind, insbesondere im Falle von Stickstoff mit zwei Methylgruppen substituiert sind.

Mehr bevorzugte cyclische Kohlenwasserstoffe sind substituierte oder nicht substituierte Cyclopentyl oder Cyclohexylgruppen aufweisende Systeme, besonders bevorzugt 2-Aminocyclohexyl, insbesondere bevorzugt die Reste des Isophorondiamins.

Die Reste R^{N1} und R^{N2} können gemeinsam mit dem Stickstoff, an den sie gebunden sind, ein mono-, bi- oder tricyclisches aliphatisches Ringsystem mit 3 bis 10 Ringgliedern bilden, wobei die Ringglieder bildenden Atome ausgewählt sind aus der Gruppe Kohlenstoff, Stickstoff und Sauerstoff, bevorzugte Ringsysteme sind mono- oder bicylcische aliphatische Ringsysteme, mehr bevorzugte Ringsysteme sind Pyridinyl, Piperidyl, Piperazinyl, Morpholinyl, Imidazol.

Bevorzugt weist der Polyetherrest nach Formel (1a) und/oder nach Formel (1 b) mehr Oxypropylen- als Oxyethylen-einheiten auf.

Weiterhin bevorzugt weist der Polyetherrest der Formel (1a) keine terminalen Chlormethylgruppen auf. Insbesondere ist die erfindungsgemäße Ausführung bevorzugt nach der der Polyetherrest nach Formel (1a) endständig eine Hydroxypropylgruppe aufweist.

Weiterhin bevorzugt weist der Polyetherrest der Formel (1 b) keine terminalen Reste R4 auf. Besonders bevorzugt weist der Polyetherrest der Formel (1 b) endständig eine Hydroxypropylgruppe auf.

Insbesondere bevorzugt weisen alle Polyetherreste terminal eine Hydroxypropylgruppe auf.

Bevorzugt weisen die erfindungsgemäßen Polysiloxan-Polyether-Copolymere mit Amino- und/oder quaternären Ammoniumgruppen im Polyetherteil nach Formel (1) keine Halogenatome, insbesonder keine Chloratome auf.

Bevorzugt weisen die erfindungsgemäßen Verbindungen der Formel (1) keine Doppelbindungen auf, besonders bevorzugt weisen sie keine Methylidengruppen auf.

Insbesondere bevorzugt sind Verbindungen der Formel (1), (1a) und (1 b), in denen m1 gleich 15 bis 100, m3 gleich 1 bis 3, m4 gleich 0, m5 gleich 2 bis 4, a gleich 1, n gleich, 0 bis 20, o gleich15 bis 80, p gleich 0 bis 5, q gleich 1 bis 10, Y gleich Wasserstoff, Z1 gleich Methylen, R⁵ gleich Wasserstoff, W gleich 3-(3-Dimethylamino)-propylamino, 2-(2-Aminoethyl)-aminoethylamino oder n-Hexylamin ist und die nicht aufgeführten Indizes und Reste die oben definierten Bedeutungen haben.

Die in Formeln (1), (1a), (1b), (2), (3), (4), (5), (6) und (6a) wiedergegebenen Indexzahlen m1, m2, m3, m4, m5, a, n, o, p, q und die Wertbereiche der angegebenen Indizes verstehen sich als die Mittelwerte der möglichen statistischen Verteilung der tatsächlich vorhandenen Strukturen und/oder deren Mischungen,. wobei die Verteilungen der Formel (5) und des Index a durch Einsatz von Stoffgemischen als Starter für die Herstellung der Polyether der Formeln (3) und (4) entstehen. Analoges gilt für die Formel (6), wenn Mischungen von Aminen eingesetzt werden. Dies gilt auch für als solche an sich exakt wiedergegebene Strukturformeln.

Die Nachweise der erfindungsgemäßen Halogen-Freiheit und die Abwesenheit von Methylidengruppen sind dem Fachmann geläufig. Im Umfang der vorliegenden Erfindung wird unter halogenfrei und frei von Methylidengruppen verstanden, dass die entsprechenden Resonanzsignale in den ¹³C-NMR Spektren nicht nachweisbar sind. Dem Fachmann ist die Lage und Multiplizität der Signale bekannt, insbesondere sind die Signale der Methylidengruppen im ¹³C-NMR zuverlässig zuzuordnen.

Die erfindungsgemäßen Polysiloxan-Polyether-Copolymere mit Amino- und/oder quaternären Ammoniumgruppen im Polyetherteil sind prinzipiell nach den Verfahren im Stand der Technik erhältlich, bevorzugt werden sie mit dem im Folgenden beschriebenen Verfahren hergestellt.

Das erfindungsgemäße Verfahren weist mindestens einen Schritt (i), in dem mindestens ein Chlormethylgruppenhaltiger terminal ungesättigter Polyether hydrosilyliert wird, einen Schritt (ii), indem die Chloratome durch Aminogruppen eines Stickstoff aufweisenden Restes substituiert werden und optional einen Schritt (iii), indem mindestens ein Stickstoffatom in eine quaternäre Ammoniumgruppe umgewandelt wird, auf.

Weiterhin können im erfindungsgemäßen Verfahrens optional Lösemittel eingesetzt werden, optional Salze (Chloride) z.B. per Filtration oder Phasentrennung aus dem Endprodukt entfernt werden und/oder optional monomere, freie Amine entfernt werden z.B. durch Destillation.

### a) Hydrosilylierung

Im Schritt (i) des erfindungsgemäßen Verfahrens werden ein oder mehrere Wasserstoffsiloxane mit mindestens einer SiH Funktion pro Molekül in Gegenwart eines für die Hydrosilylierung geeigneten Katalysators mit mindestens einem terminal ungesättigten chlorhaltigen Polyether unter SiC-Verknüpfung umgesetzt.

Bevorzugt werden im erfindungsgemäßen Verfahren im Schritt (i) ein Polyether der Formel (3)

CH₂=C(Y)-(Z)ₐ-O-(R¹)ₙ-(R²)ₒ-(R³)ₚ-(R⁶)_{q}-R⁵ Formel (3)

wobei
a, n, o, p, q, R¹, R², R³, R⁵, Y die zuvor definierten Bedeutungen haben,
Z ein divalenter gesättigter oder ungesättigter organischer Rest,
R⁶ = -CH₂CH(CH₂Cl)O- oder -CH(CH₂Cl)CH₂O- ist
mit der Maßgabe, dass die Summe der Indizes n + o + p + q mindestens gleich 3 ist;
mit mindestens einem Wasserstoffsiloxan der Formel (2), 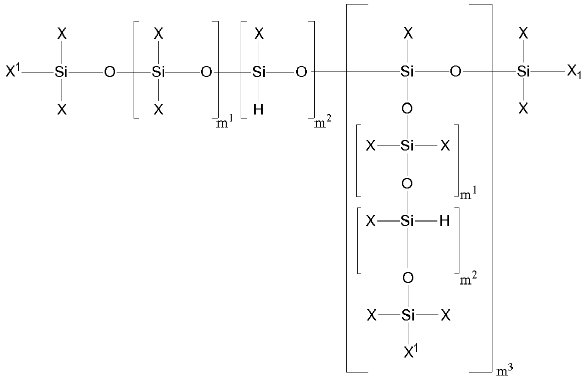 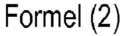 wobei
m1, m3 und X die zuvor definierten Bedeutungen haben
   - X1: wahlweise X oder H ist,
   - m2: eine ganze Zahl von 0 bis 60, vorzugsweise von größer 0 bis 40, insbesondere von 1 bis 20 ist,
mit der Maßgabe, dass m2 mindestens 1 ist, wenn X1 ungleich H ist,
unter Verwendung eines die Hydrosilylierung begünstigenden Katalysators umgesetzt.

Die Polyether der Formel (3) zeichnen sich durch gewichtsmittlere Molmassen von größer als 200 bis zu 15000 g/mol, vorzugsweise von 500 bis zu 10000 g/mol, weiterhin vorzugsweise von 750 bis zu 8000 g/mol aus.

Bevorzugt sind Polyether der Formeln (3), die neben Epichlorhydrin aus den Alkylenoxiden Ethylenoxid, Propylenoxid, Butylenoxid oder Styroloxid aufgebaut sind und ausgehend von Allylalkohol als Kettenstarter hergestellt werden. Besonders bevorzugt zeichnen sich die Polyether der Formel (3) durch die Copolymerisation von Epichlorhydrin mit Propylenoxid und/oder Ethylenoxid aus.

Kennzeichnendes Merkmal aller Polyether der Formel (3) ist das Strukturelement [-CH₂-CH(CH₂Cl)-O-] bzw. [-CH(CH₂Cl)-CH₂-O-] in der Polymerkette.

Bevorzugt wird das erfindungsgemäße Verfahren so ausgeführt, dass die Polyether der Formel (3) keine terminalen Chlormethylgruppen aufweisen. Insbesondere ist die erfindungsgemäße Ausführung bevorzugt nach der als letzte Dosierung in der DMC-katalysierten Ringöffnungspolymerisation Propylenoxid zugegeben wird.

Die Chloratome enthaltenden Polyether der Formel (3) können in Kombination mit weiteren zur Hydrosilylierung fähigen Verbindungen mit den Wasserstoffsiloxanen der Formel (2) umgesetzt werden. Dies sind Chlor freie Polyether der Formel (4)

CH₂=C(Y)-(Z)ₐ-O-(R¹)ₙ-(R²)ₒ-(R³)ₚ-R⁵ Formel (4)

wobei
a, n, o, p, R¹, R², R³, R⁵, Y, Z die zuvor definierten Bedeutungen haben.

Das molare Verhältnis der Polyether gemäß Formeln (3) und (4) ist variabel. Bevorzugt ist die Verwendung eines molaren Überschusses an Chloratome enthaltenden Polyethern, um die erfindungsgemäßen Polysiloxan-Polyether-Copolymere mit mindestens einer Amino- oder quaternären Ammoniumfunktion gemäß Formel (1) zu erhalten.

Polyether der Formeln (3) und (4) können mit den dem Fachmann bekannten z.B. sauer- oder DMC-katalysierten Alkoxylierungsmethoden, bevorzugt in einer DMC-katalysierten Reaktion hergestellt werden.

Als Katalysatoren zur Herstellung von Polyethern werden Doppelmetallcyanid (DMC)-Katalysatoren eingesetzt. Die DMC-katalysierte Alkoxylierung verläuft sehr selektiv und schnell und erlaubt die Herstellung von Polyethern mit hohen Molmassen und vergleichsweise niedriger Polydispersität. Die Herstellung und Verwendung von Doppelmetallcyanid-Komplexen als Alkoxylierungskatalysatoren ist in US 5,470,813 und US 5,482,908 beschriebenen, unter ihnen haben sich die Zink-Cobalt-Hexacyanokomplexe als wirksamste Typen von DMC-Katalysatoren erwiesen. Dank ihrer außerordentlich hohen Aktivität werden zur Herstellung von Polyethern nur geringe Katalysatorkonzentrationen benötigt.

Bevorzugt wird ein Doppelmetallcyanid-Katalysator der formalen Summenformel Zn₃[Co(CN)₆]₂) eingesetzt, insbesondere bevorzugt sind Katalysatoren wie sie in EP0755716 (US 5,780,584 und US 5,627,122) beschrieben sind.

Weiterhin wird der DMC-Katalysator vorzugsweise in einer Menge von größer 0 bis 2000 wppm (Massen-ppm), bevorzugt von 30 wppm bis 1800 wppm bezogen auf die Masse des gesamten Polyethers eingesetzt.

Die im Sinne der Erfindung bevorzugt eingesetzten Polyether der Formeln (3) und (4) sind Alkoxylierungsprodukte von Epichlorhydrin, hergestellt unter Verwendung von DMC-Katalysatoren. Derartige Produkte sind aus US 7,423,112 bekannt.

Als Starter für die Herstellung der Polyether der Formeln (3) und (4) werden ungesättigte Hydroxylverbindungen der Formel (5) eingesetzt.

CH₂=CH(Y)-(Z)ₐ-OH Formel (5)

wobei die Reste Z und Y sowie der Index a wie oben angeführt definiert sind.

Bevorzugt sind terminal ungesättigte Alkohole wie z.B, Allylalkohol, Methallylalkohol, Hex-5-en-1-ol, Vinyloxybutanol, Trimethylolpropanmonoallylether, Glycerinmonoallylether und Pentaerythritmonoallylether, Eugenol, Allylphenol,Allyloxyethanol, besonders bevorzugt sind die Starter Allylalkohol und Methallylalkohol.

Bevorzugte Alkylenoxide sind Ethylenoxid, 1,2-Epoxypropan (Propylenoxid), Epichlorhydrin, 2,3-Epoxy-1-propanol, 1,2-Butylenoxid, 2,3-Epoxybutan, 1,2-Epoxypentan, 1,2-Epoxyhexan, 1,2-Epoxyoctan, 1,2-Epoxydecan, 1,2-Epoxydodecan, Styroloxid, 1,2-Epoxycyclopentan, 1,2-Epoxycyclohexan, (2,3-Epoxypropyl)benzol, 2-Vinyloxiran, 1,2-Epoxy-3-phenoxypropan, 2-Methoxymethyloxiran, 2,3-Epoxypropylisopropylether, (3,4-Epoxybutyl)stearat, 2,3-Epoxylpropanmethacrylat, Epifluorhydrin, Epibromhydrin, Epiiodhydrin, besonders bevorzugt sind Ethylenoxid, Propylenoxid, 1,2-Butylenoxid, Epichlorhydrin und Styroloxid.

Als Katalysatoren für die Hydrosilylierung können Metallkatalysatoren, vorzugsweise Edelmetallkatalysatoren der Platingruppe, mehr bevorzugt platin-, rhodium-, iridium- oder rutheniumhaltige Katalysatoren, insbesondere Komplexe eingesetzt werden, die dem Fachmann als hydrosilylierungsaktive Katalysatoren bekannt sind, z. B. Platinverbindungen, wie beispielsweise Hexachloroplatinsäure, (NH₃)₂PtCl₂, cis-Platin, Bis-(cycloocten)Platindichlorid, carbo-Platin, Platin(0)-(divinyltetramethyldisiloxan)-Komplexe, sogenannte Karstedt-Katalysatoren, oder auch mit unterschiedlichen Olefinen komplexierte Platin(0)-Komplexe, eingesetzt werden. Des Weiteren eignen sich Rhodium- und Rutheniumverbindungen, wie beispielsweise Tris(triphenylphosphin)-Rhodium(I)chlorid oder Tris(triphenylphosphin)-Rhuthenium(II)dichlorid. Im Sinne des erfindungsgemäßen Verfahrens bevorzugte Katalysatoren sind Platin(0)-Komplexe. Besonders bevorzugt sind Karstedt-Katalysatoren oder sogenannte WK-Katalysatoren, die gemäß EP1520870 (US 7,157,541) hergestellt werden können. Insbesondere bevorzugt sind Platin(O)-(divinyltetramethyldisiloxan)-Komplexe.

Geeignete und bevorzugte Bedingungen für die Hydrosilylierungsreaktion sind z.B. in EP 1520870 (Anwendungsbeispiele 1, 4-7) beschrieben; diese wird hiermit als Referenz eingeführt und gilt als Teil des Offenbarungsgehaltes der vorliegenden Erfindung.

Dem Fachmann ist geläufig, dass der Katalysator so gewählt sein muss, dass er nicht durch die verwendeten Einzelkomponenten der Reaktion inhibiert oder inaktiviert wird, bevorzugt werden Katalysator-Reaktandenmischungen, die die Eigenschaften, sowie die Reaktivität des Katalysators nicht beeinflussen.

Die Hydrosilylierungskatalysatoren werden vorzugsweise in einer Menge von 0,1 bis 1000 wppm, mehr bevorzugt 1 bis 100 wppm, besonders bevorzugt mehr als 1 bis zu 50 wppm und insbesondere bevorzugt 2 bis 30 wppm bezogen auf die Masse des Gesamtansatzes der Hydrosilylierungsreaktion eingesetzt.

Die Hydrosilylierungsreaktion kann im Eintopfverfahren oder im Zudosierverfahren, einstufig oder mehrstufig durchgeführt werden. Zur Kompatibilisierung der Reaktanden oder auch zur vereinfachten Handhabung hochviskoser bis fester Reaktanden kann die Reaktion in Lösungsmitteln wie beispielsweise Toluol oder Xylol durchgeführt werden. Die Reaktion kann ebenfalls lösungsmittelfrei in Form einer Emulsionspolymerisation durchgeführt werden. Großtechnisch kann die Hydrosilylierung sowohl im Rührkessel als klassischer Batch-Prozess als auch im kontinuierlichen Prozess, wie beispielsweise in der EP 1013701 (US 6,291,622) beschrieben, gefahren werden.

Die Hydrosilylierkatalysatoren können als Feststoff oder in gelöster Form in das Reaktionsgemisch oder in einen der Reaktanden dosiert werden.

Bevorzugt werden die Hydrosilylierungskatalysatoren in gelöster Form in einem flüssigen Siloxan dosiert. Bevorzugte flüssige Siloxane sind cyclische Siloxane mit 3 bis 8 Siloxaneinheiten, insbesondere bevorzugt ist Decamethylcyclopentasiloxan. Die Katalysatorlösungen können auch Mischungen unterschiedlicher Siloxane enthalten, besonders bevorzugt sind Mischungen, die Decamethylcyclopentasiloxan enthalten.

Weiterhin bevorzugt werden die Hydrosilylierungskatalysatoren in verdünnter Lösung eingesetzt. Bevorzugte Konzentrationen an Katalysator liegen zwischen 0,01 und 1 Gew.-% Platin, mehr bevorzugt zwischen 0,05 und 0,75 Gew.-% Pt und insbesondere zwischen 0,15 und 0,5 Gew.-% Pt bezogen auf den Platinanteil der Katalysatoren in der Katalysatorlösung.

Insbesondere bevorzugt sind Lösungen von Platin(0)-(divinyltetramethyldisiloxan)-Komplexe in Decamethylcyclopentasiloxan mit einem Katalysatorgehalt von 0,09 bis 0,12 Gew.-% Platin bezogen auf den Platinanteil der Katalysatoren in der Katalysatorlösung.

Die Hydrosilylierung kann bei Temperaturen im Bereich von 20 bis 200 °C durchgeführt werden, bevorzugt bei 40 bis 150 °C und insbesondere bevorzugt bei 60 bis 120 °C. Der Reaktionsumsatz kann mittels gasvolumetrischer Bestimmung des siloxangebundenen Wasserstoffs erfolgen. Dabei wird eine Probe des Reaktionsgemisches in alkalischer Lösung zersetzt und der dadurch freigesetzte Wasserstoff an einer Gasbürette gemessen.

Es kann vorteilhaft sein, das erfindungsgemäße Verfahren so auszuführen, dass die C=C-Doppelbindungen des Polyethers praktisch quantitativ mit den SiH Gruppen der Siloxankomponente zur Reaktion gebracht werden. Weiterhin vorteilhaft sind Ausführungen, bei denen die erfindungsgemäßen Verbindungen der Formel (1) keine freien SiH Gruppen mehr enthalten.

Die durch die Hydrosilylierung erhaltenen erfindungsgemäßen Verbindungen können in Abhängigkeit der verwendeten Edukte transparent oder milchig trüb sein. Die Viskositäten liegen bei Raumtemperatur im Bereich von 1 bis 100.000 mPa*s, bevorzugt von größer 1 bis 50.000 mPa*s und insbesondere bevorzugt von 2 bis 20.000 mPa*s. Die Viskositäten können mittels eines Spindelviskosimeter vom Typ Brookfield LV-DV-I+ bei 25°C bestimmt werden. Diese Messungen können in Anlehnung an die DIN 53019 durchgeführt werden.

Das molare Verhältnis der SiH-Gruppen im Wasserstoffsiloxan der Formel (2) zur Summe der C=C-Doppelbindungen der Polyether (3) und (4) in der Hydrosilylierungsreaktion ist in weiten Grenzen variierbar. Bevorzugt ist ein molares Verhältnis von Doppelbindung zu SiH von größer 0,8 zu 1,0, besonders bevorzugt größer 1,0 zu 1,0 bis 1,5 zu 1,0. Bei einem Überschuss der Doppelbindungen bezogen auf SiH verbleiben Überschusspolyether im Hydrosilylierungsprodukt. Die Überschusspolyether können unverändert vorliegen oder durch Nebenreaktionen wie auch durch nachgeschaltete Reaktionen strukturell verändert sein. Die Überschusspolyether können insbesondere durch mögliche Allyl-Propenyl-Umlagerungen entstanden sein. Die Überschusspolyether werden damit zum Bestandteil der Reaktionsprodukte.

### b) Reaktion mit Aminen

Im Schritt (ii) des erfindungsgemäßen Verfahrens werden die Produkte des Schrittes (i) mit mindestens einer Aminverbindung der Formel (6a)

H-N R^{N1}R^{N2} Formel (6a)

unter Substitution mindestens eines Chloratoms umgesetzt, wobei bezüglich R^{N1} und R^{N2} die zu Formel (6) angegebenen Bedeutungen gelten.

Die aus der Hydrosilylierung hervorgegangenen Polysiloxan-Polyether-Copolymere mit chlorhaltigem Polyetherteil (Produkte des Schrittes (i)) werden unter Cl-Substitution mit einer oder mit mehreren Stickstoff-haltigen Verbindungen zu den erfindungsgemäßen Produkten der Formel (1) umgesetzt.

Bevorzugt werden alle Chloratome durch Substitution mit Aminogruppen ersetzt. Der Nachweis der vollständigen Umsetzung erfolgt vorzugsweise 13C-NMR spektroskopisch.

Ein Vorteil des erfindungsgemäßen Verfahrens nach Schritt (ii) ist, dass die Substitution ohne Eliminierung zu ungesättigten Verbindungen abläuft.

Einsetzbar sind alle Aminverbindungen mit primären, sekundären oder tertiären Amingruppen und Molmassen von 17 g/mol (Ammoniak) bis 1000 g/mol, bevorzugt 31 g/mol bis 600 g/mol, insbesondere bevorzugt von 31 g/mol bis 300 g/mol. Dabei können die Aminverbindungen 1, 2, 3, 4, 5, 6, 7, 8, 9 oder 10 primäre, sekundäre und/oder tertiäre Amingruppen enthalten, bevorzugt 1 bis 5 und insbesondere bevorzugt 1 bis 3 Aminogruppen. Im Sinne der Erfindung geeignete Aminverbindungen sind beispielsweise Ammoniak, Methylamin, Ethylamin, Propylamin, Butylamin, Pentylamin, Hexylamin, 2-Ethylhexylamin, Histamin, 2-Phenylethylamin, Dimethylamin, Diethylamin, Dipropylamin, Dibutylamin, Dipentylamin, Dihexylamin, Ethylendiamin, Propylendiamin, Butylendiamin, Pentylendiamin, Hexylendiamin, Diethylentriamin, Dipropylendiamin, 1,5,10-Triazodecan, Triethylentetramin, 1,2-Diaminocyclohexan, 4,4'-Diaminodiphenylsulfon, 1,5-Diamino-2-methylpentan, Isophorondiamin, 3-(Dimethylamino)propylamin, N,N-Dimethylethylendiamin, 1-Methylimidazol, Ethanolamin, 1-Aminopropan-2-ol, Dopamin, Thioethanolamin, Bis(3-dimethylamino)propylamin, Pyrrolidin. Ringsysteme sind Piperidin, Piperazin, Morpholin, Azepan, Imidazol.

Die Reaktion zwischen Aminverbindungen und chlorhaltigem Siloxan-Polyether-Copolymer findet zwischen 40 und 200 °C statt, besonders bevorzugt im Temperaturbereich zwischen 70°C und 140 °C. Sie bedarf einer Reaktionszeit von einer Stunde bis 12 Stunden, besonders bevorzugt von 2 Stunden bis 6 Stunden. Die Menge der Aminogruppen im Reaktionsgemisch im Bezug auf den Chlor-Gehalt im Copolymer beträgt 0,5 bis 5 Äquivalent Aminogruppe pro 1 Äquivalent Chlor-Gruppe im chlorhaltigen Siloxan-Polyether-Copolymer, besonders bevorzugt 1,0 bis 4 Äquivalent Aminogruppe, insbesondere bevorzugt 1,5 bis 3 Äquivalente. Die sich im Laufe der Reaktion gebildeten Salze können mittels Filtration bzw. mittels Extraktion aus dem Produkt entfernt werden. Geeignete Extraktionsmittel sind z.B. Wasser bzw. wässrige Lösungen z.B. von Säuren oder Basen. Gegebenfalls wird der Überschuss an Aminverbindung abdestilliert.

Nach diesem Verfahren hergestellte aminfunktionalisierte Polyethersiloxan-Copolymere enthalten mindestens eine Aminogruppe. Sie haben ein gewichtsmittleres Molekulargewicht im Bereich von mindestens 500 g/mol bis 100000 g/mol, bevorzugt von 2000 bis 75000 g/mol und insbesondere bevorzugt von 5000 bis 50000g/mol.

### c) Quaternisierung

Das erfinderische Verfahren weist optional einen weiteren Schritt (iii) auf, indem das Produkt des Schrittes (ii) unter Bildung mindestens einer Ammoniumgruppe weiter umgesetzt wird, wobei die Umsetzung zur Bildung von quaternärenen Verbindungen führt.

Unter Quaternisierung soll im Sinne der vorliegenden Erfindung neben der Umsetzung von Aminogruppen haltigen Polysiloxan-Polyether-Copolymeren der Formel (1) mit Alkylierungsmitteln auch die Umsetzung mit Säuren verstanden werden.

Dem Fachmann ist geläufig, dass die Protonierung von Aminoverbindungen wie denen der Formel (1) abhängig vom pKs-Wert und evt. anwesenden Lösungsmitteln ist, prinzipiell sind Brönstedtsäuren zur Protonierung geeignet.

Bevorzugte Säuren können Mineralsäuren wie z.B.: Fluorwasserstoffsäure, Salzsäure, Bromwasserstoffsäure, Salpetersäure, Schwefelsäure, Phosphorsäure oder Amidosulfonsäure und organische Säuren wie z.B. Trifluoressigsäure, Essigsäure und p-Toluolsulfonsäure sein, mehr bevorzugt organische Säuren, insbesondere Essigsäure. Besonders bevorzugte Säuren sind halogenfrei.

Als Alkylierungsmittel können Alkyl-, Aryl- oder Aralkylhalogenide wie z.B. Methylchlorid, ethylbromid, Methyliodid, Ethylbromid oder Ethyliodid, Benzylhalogenide, wie Benzylchlorid oder Benzylbromid; Di- Alkyl-, Aryl- oder Aralkylsulfate wie z.B. Dimethylsulfat oder Diethylsulfat, oder Oxoniumsalze wie z.B. Trimethyloxoniumchlorid, Trimethyloxoniumbromid, Trimethyloxoniumtetrafluoroborat, Triethyloxoniumchlorid, Triethyloxoniumbromid und Triethyloxoniumtetrafluoroborat eingesetzt werden, bevorzugt sind Dialkylsulfate, insbesondere bevorzugt ist Dimethylsulfat. Besonders bevorzugte Alkylierungsmittel sind halogenfrei.

Dem Fachmann ist geläufig, dass die quaternisierten Polysiloxan-Polyether-Copolymeren in stöchiometrischen Verhältnissen die entsprechenden Anionen der verwendeten Alkylierungsmittel bzw. der verwendeten Säuren enthalten.

Es kann vorteilhaft sein, wenn die Anionen mit Hilfe eines Ionenaustauschers zumindest teilweise ausgetauscht werden. Die ausgetauschten Anionen ergeben sich aus der vorherigen Beladung der Ionenaustauscher in einer dem Fachmann geläufigen Art und Weise. Besonders vorteilhaft ist der Austausch von halogenhaltigen Anionen beziehungsweise Halogeniden gegen Anionen, die keine Halogenatome enthalten.

Einhergehend mit der Quaternisierung gewinnt das Copolymer im Vergleich zum unmodifizierten aminischen an Substantivität auf textilen oder faserigen Substraten und auch an Einfluss auf deren Neigung zur elektrostatischen Aufladung.

Das erfindungsgemäße Verfahren erlaubt es auf einfache Weise, Copolymerstrukturen aufzubauen. Der hydrophobe Siloxancharakter kann durch die Siloxankettenlänge, der hydrophile Charakter sowie der Amingehalt durch die Wahl des Polyethers und der Aminfunktionalität fast nach Belieben eingestellt werden. Die Distanz der in elektrostatische Wechselwirkung eintretenden Stickstofffunktionen mit der Oberfläche des Substrats kann so optimal bestimmt werden.

Das erfindungsgemäße Verfahren zeichnet sich vorteilhaft aus, da es die Flexibilität bietet, die Affinität der Produkte zum textilen und/oder faserigen Träger und letztlich die Substantivität auf demselben durch gezielte Wahl der Struktur des hydrophoben Polysiloxangerüsts, des hydrophilen Polyetherteils und durch die Aminfunktionalität gezielt einzustellen.

Es ist dem Fachmann geläufig, dass die Produkte des erfindungsgemäßen Verfahrens in Form eines Gemisches mit einer im Wesentlichen durch statistische Gesetze geregelten Verteilung der genannten Indizes vorliegen.

Statistische Verteilungen im Sinne der gesamten Erfindung können blockweise aufgebaut sein mit einer beliebigen Anzahl an Blöcken und einer beliebigen Sequenz oder einer randomisierten Verteilung unterliegen, sie können auch alternierend aufgebaut sein oder auch über die Kette einen Gradienten bilden, insbesondere können sie auch alle Mischformen bilden, bei denen gegebenenfalls Gruppen unterschiedlicher Verteilungen aufeinander folgen können. Spezielle Ausführungen können dazu führen, dass die statistischen Verteilungen durch die Ausführung Beschränkungen erfahren. Für alle Bereiche, die nicht von der Beschränkung betroffen sind, ändert sich die statistische Verteilung nicht.

Wo immer Moleküle beziehungsweise Molekülfragmente ein oder mehrere Stereozentren aufweisen oder aufgrund von Symmetrien in Isomere unterschieden werden können oder aufgrund anderer Effekte z.B. eingeschränkter Rotation in Isomere unterschieden werden können, sind alle möglichen Isomere von der vorliegenden Erfindung mit eingeschlossen. Isomere sind dem Fachmann bekannt, in besonderer Weise wird auf die Definitionen von Prof. Kazmaier der Universität des Saarlandes verwiesen, z.B. http://www.uni-saarland.de/fak8/kazmaier/PDF_files/vorlesungen/Stereochemie%2Strassb%20Vorl age.pdf. Insbesondere sind alle Möglichkeiten, die sich aus den stereochemischen Definitionen der Taktizität ergeben eingeschlossen, z.B. isotaktisch, syndiotaktisch, heterotaktisch, hemiisotaktisch, ataktisch. Bevorzugt im Sinne der Erfindung sind Polyether und Polyetherfragmente mit zumindest teilweiser ataktischer Substituentenfolge.

Ebenfalls Gegenstand der vorliegenden Erfindung sind Zusammensetzungen enthaltend die Produkte des erfindungsgemäßen Verfahrens.

Erfindungsgemäße Zusammensetzungen enthalten neben den erfindungsgemäßen Polysiloxan-Polyether-Copolymere mit Amino- und/oder quaternären Ammoniumgruppen im Polyetherteil der Formel (1) oder den erfindungsgemäßen Verfahrensprodukten weiterhin Additive und Hilfsstoffe, die ausgewählt sein können aus der Liste enthaltend Emulgatoren, Wasser, Lösemittel, Parfüm, Parfümträger, Farbstoffe, Viskositätsregulatoren, Entschäumer, Konservierungsmittel, antimikrobiellen Wirkstoffe, Germizide, Fungizide, Antioxidantien, organische Lösemittel, nicht siloxanhaltige Polymere und andere nicht erfindungsgemäße siloxanhaltige Polymere wie z.B. Silikonöle, Tenside, Gerüststoffe, Bleichmittel, Bleichaktivatoren, Enzyme, Fluoreszenzmittel, Schauminhibitoren, Antiredepositionsmittel, optische Aufheller, Vergrauungsinhibitoren, Einlaufverhinderer, Knitterschutzmittel, Farbübertragungsinhibitoren, Korrosionsinhibitoren, Antistatika, Bittermittel, Bügelhilfsmittel, Phobier- und Imprägniermittel, Quell- und Schiebefestmittel, neutrale Füllsalze sowie UV-Absorber. Hierbei können Substanzen einer Klasse auch in einer anderen Klasse Wirksamkeit entfalten.

Bevorzugte erfindungsgemäße Zusammensetzungen sind insbesondere Konzentrate, Compounds /Emulsionskonzentrate und/oder deren wässerige Formulierungen, wässrige Emulsionen und/oder Lösungen, eine Formulierung oder Emulsion in organischen Verbindungen wie Polyethern, Polyolen, Alkoholen.

Besonders bevorzugte erfindungsgemäße Zusammensetzungen sind Weichspüler. Dies sind wässrige Formulierungen, die neben den erfindungsgemäßen Verbindungen der Formel (1) bzw. den erfindungsgemäßen Verfahrensprodukten weitere Additive und Hilfsstoffe enthalten. Bevorzugte Additive und Hilfsstoffe sind Parfüm, Farbstoffe, Viskositätsregulatoren, Entschäumer, Konservierungsmittel, organische Lösemittel, nicht siloxanhaltige Polymere und andere nicht erfindungsgemäße siloxanhaltige Polymere. Insbesondere können die erfindungsgemäßen Zusammensetzungen zwischen 0,001 und 25 Gew.-%, besonders bevorzugt 0,01 bis 15 Gew.-% bezogen auf die Gesamtmasse des Weichspülers eines oder mehrerer unterschiedlicher Additive oder Hilfsstoffe enthalten.

Weiterhin besonders bevorzugte erfindungsgemäße Zusammensetzungen sind Konzentrate, welche die erfindungsgemäßen Verbindungen der Formel (1) bzw. die erfindungsgemäßen Verfahrensprodukte in Konzentrationen von etwa 90 bis 99,99 Gew.-% bezogen auf die gesamte Konzentratmasse enthalten, die nur mit geringen Anteilen an Lösemitteln versetzt sind. Bevorzugt sind die Konzentrate keine wässrigen Lösungen.

Weitere besonders bevorzugte erfindungsgemäße Zusammensetzungen sind Compounds- oder Emulsionskonzentrate, die die erfindungsgemäßen Verbindungen der Formel (1) bzw. die erfindungsgemäßen Verfahrensprodukte in Konzentrationen von 50-90 Gew.-%, bevorzugt 50-80 Gew.-% bezogen auf die Gesamtmasse enthalten. Weitere Bestandteile dieser Zusammensetzungen sind Wasser und/oder Lösemittel, ausgewählt aus der Gruppe der Glykole, unverzweigten und/oder verzweigten Alkohole und/oder Alkylether mit 1 bis 6 Kohlenstoffatomen und gegebenenfalls einen oder mehreren nicht-ionischen Emulgatoren, beispielsweise ein Alkoholethoxylat mit 3-25 Ethylenoxideinheiten. Compounds- und Emulsionskonzentrate sind in der Regel in Wasser löslich bzw. selbstemulgierbar.

Insbesondere bevorzugte erfindungsgemäße Zusammensetzungen sind Weichspüler zur temporären oder permanenten Ausrüstung von Textilien.

Textilien, wie sie im Umfang dieser Erfindung verstanden werden, sind Flächengebilde beispielsweise ausgewählt aus der Gruppe umfassend Gewebe, textile Gewebe, Gewirke, Gestricke, Non-wovens, Tissue (Papierfaser) und/oder Fasern aus natürlichen und/oder synthetischen Rohstoffen und/oder Leder und/oder Haare und/oder Fell.

Die erfindungsgemäßen Zusammensetzungen können gegebenenfalls weitere Textilweichmacher enthalten. Dies sind eine oder mehrere kationische Textil-weichmachende Verbindungen, die eine oder mehrere langkettige Alkylgruppen in einem Molekül aufweisen. Weit verbreitete kationische Textil-weichmachende Verbindungen umfassen beispielsweise Methyl-N-(2-hydroxyethyl)-N,N-di(talgacyloxyethyl)ammonium-Verbindungen oder N,N-Dimethyl-N,N-di(talgacyloxyethyl)ammonium-Verbindungen. Weitere geeignete Ammoniumverbindungen offenbart die US 2010/0184634 in den Absätzen [0027] bis [0068], deren diesbezüglicher expliziter Offenbarungsgehalt durch diese Bezugnahme Teil dieser Offenbarung wird.

Die erfindungsgemäßen Zusammensetzungen können z.B. als Weichmacher für Textilien und Gewebe in Form von Konzentraten, Compounds/ Emulsionskonzentraten und Formulierungen, wobei die erfindungsgemäßen Verbindungen der Formel (1) oder die erfindungsgemäßen Verfahrensprodukte in solchen Systemen anteilsmäßig zu 0,5 bis 99 Gew.-%, bevorzugt zu 3 bis 70 Gew.-%, im Besonderen zu 5 bis 50 Gew.-% bezogen auf die gesamte Formulierung eingesetzt werden.

Durch Verdünnen mit Wasser können aus den erfindungsgemäßen Konzentraten, Compounds/ Emulsionskonzentraten und Formulierungen z.B. die erfindungsgemäßen Weichspüler hergestellt werden.

Der Begriff Flotte steht für eine meist wässrige Flüssigkeit, in der Textilien gewaschen, gebleicht, gefärbt oder imprägniert werden. Eine erfindungsgemäße Flotte enthält die erfindungsgemäßen Verbindungen der Formel (1) bzw. die erfindungsgemäßen Verfahrensprodukte. Dabei bedeutet der Begriff Flotte die Gesamtheit aus Lösungsmittel (meist Wasser) und allen darin enthaltenen (gelösten, emulgierten oder dispergierten) Bestandteilen wie beispielsweise Farbstoffen, Emulgatoren und weiteren Hilfsmitteln. Die Gesamtheit der in der Flotte gelösten Bestandteile wird gemeinhin auch als Feststoffgehalt bezeichnet, wobei der Feststoffgehalt den Trocknungsrückstand nach Verdampfung der flüchtigen Bestandteile (bei etwa 100 °C bis 105 °C) angibt. Die Menge der Komponenten einer Flotte wird meist in g/l bei Flüssigkeiten oder % (bezogen auf das Warengewicht) angegeben.

Im Textilbereich spricht man von einer Behandlungs-Flotte als dem Bad (meist wässrig), in dem (oder mit dem) das Gewebe mit einem oder mehreren (oberflächenaktiven) Stoffen ausgerüstet wird. Dabei gibt es neben den Hauptsystemen weitere Applikationsformen wie Aufsprühen, Rakeln oder Walzenauftrag, je nach Endanwendung und somit Viskosität des Produktes.

Für wässrige Systeme werden hauptsächlich zwei Systeme verwendet:
Für substantive, also kationische Produkte - Ausziehverfahren ("Exhaustion"), hier wird im Prinzip, wie der Weichspüler in der Waschmaschine, das Gewebe für eine bestimmte Zeit bei bestimmter Temperatur in der Flotte bewegt. Anschließend wird diese abgelassen und das Gewebe getrocknet.
Für nicht-substantive und substantive Produkte - Foulard-Applikation, wie beispielsweise mit einem Labor-Foulard der Firma Matthis (Typ HVF), hier wird das Gewebe durch die Flotte hindurchgeleitet und zwischen den Walzen (im Mangel-Prinzip) auf eine Restfeuchte abgequetscht und anschließend getrocknet.

Als Emulgatoren werden typischerweise Fettalkoholethoxylate mit Ethoxylierungsgraden zwischen 3 und 12 eingesetzt, und zwar in einem Verhältnis vom Copolymer zum Fettalkoholethoxylat von 5 zu 1 bis 1 zu 1. Ebenso finden hoch siedende Glykole wie Dipropylenglykol oder Butyldiglykol Anwendung.

Als Parfüm können alle für wässrige Weichspüler aus dem Stand der Technik als geeignet bekannte Duftstoffe oder Duftstoffmischungen eingesetzt werden, vorzugsweise in Form eines Parfümöles. Beispiele für Duft- bzw. Riechstoffe werden unter anderem in der DE 197 51 151 A1, Seite 4, Zeile 11 - 17 offenbart. Insbesondere können die erfindungsgemäßen Zusammensetzungen zwischen 0,01 und 10, besonders bevorzugt 0,1 bis 5 Gew.-% eines oder mehrerer Duftstoffe oder Duftstoffmischungen enthalten.

Als Farbstoffe können alle für wässrige Weichspüler aus dem Stand der Technik als geeignet bekannte Farbstoffe eingesetzt werden, wobei wasserlösliche Farbstoffe bevorzugt sind. Beispiele für geeignete wasserlösliche handelsübliche Farbstoffe sind SANDOLAN® Walkblau NBL 150 (Hersteller Clariant) und Sicovit® Azorubin 85 E122 (Hersteller BASF). Insbesondere können die erfindungsgemäßen Zusammensetzungen zwischen 0,001 und 0,1 Gew.-% besonders bevorzugt 0,002 bis 0,05 Gew.-% eines oder mehrerer Farbstoffe oder Farbstoffmischungen enthalten.

Als Viskositätsregulator zur Verringerung der Viskosität kann der wässrige Weichspüler ein Alkalimetall- oder Erdalkalimetallsalz, vorzugsweise Calciumchlorid, in einer Menge von 0,05 bis 2 Gew.-% enthalten.

Als Viskositätsregler zur Erhöhung der Viskosität kann der wässrige Weichspüler einem aus dem Stand der Technik geeignet bekannten Verdicker enthalten, wobei die aus WO 2007/125005 bekannten Polyurethanverdicker bevorzugt sind. Beispiele für geeignete Verdicker sind TEGO® Visco Plus 3030 (Hersteller Evonik Tego Chemei), Acusol® 880 und 882 (Hersteller Rohm & Haas), Rheovis® CDE (Hersteller BASF), Rohagit® KF 720 F (Hersteller Evonik Röhm GmbH) und Polygel® K100 von Neochem GmbH.

Als Entschäumer können alle für wässrige Weichspüler aus dem Stand der Technik als geeignet bekannten Entschäumer eingesetzt werden. Beispiele für geeignete handelsübliche Entschäumer sind Dow Corning® DB-110A und TEGO® Antifoam® 7001 XP. Bevorzugt enthalten die erfindungsgemäßen Zusammensetzungen zwischen 0,0001 und 0,05, besonders bevorzugt 0,001 bis 0,01 Gew.-% eines oder mehrerer unterschiedlicher Entschäumer.

Als Konservierungsmittel kann der wässrige Weichspüler aus dem Stand der Technik als geeignet bekannte bakterizide und/oder fungizide Wirkstoffe enthalten, wobei wasserlösliche Wirkstoffe bevorzugt sind. Beispiele für geeignete handelsübliche Bakerizide sind Methylparaben, 2-Brom-2-nitro-1,3-propandiol, 2-Methyl-4-isothiazolin-3-on und 5-Chlor-2-methyl4-isothiazolin-3-on. Ebenso kann der wässrige Weichspüler als Konservierungsmittel einen Oxidationsinhibitor enthalten. Beispiele für geeignete handelsübliche Oxidationsinhibitoren sind Ascorbinsäure, 2,6-Di-tert-butyl-4-methlyphenol (BHT), Butylhydroxyanisol (BHA), Tocopherol und Propylgallat. Bevorzugt enthalten die erfindungsgemäßen Zusammensetzungen zwischen 0,0001 und 0,5, besonders bevorzugt 0,001 bis 0,2 Gew.-% eines oder mehrerer unterschiedlicher Konservierungsmittel. Insbesondere können die erfindungsgemäßen Zusammensetzungen zwischen 0,001 und 0,1, besonders bevorzugt 0,001 bis 0,01 Gew.-% eines oder mehrerer unterschiedlicher Oxidationsinhibitoren enthalten.

Als organische Lösemittel kann der Weichspüler kurzkettige Alkohole, Glykole und Glykolmonoether enthalten, wobei Ethanol, 2-Propanol, 1,2-Propandiol und Dipropylenglycol bevorzugt wird. Insbesondere können die erfindungsgemäßen Zusammensetzungen zwischen 0,1 und 10, besonders bevorzugt 0,2 bis 5 Gew.-% eines oder mehrerer unterschiedlicher organischer Lösemittel enthalten.

Der Weichspüler kann eines oder mehrere nicht siloxanhaltige Polymere enthalten. Beispiele dafür sind Carboxymethylcellulose, Polyethylenglycol, Poylvinylalkohol, Poly(meth)acrylate), Polyethylenimine oder Polysaccharide. Insbesondere können die erfindungsgemäßen Zusammensetzungen zwischen 0,01 und 25, besonders bevorzugt 0,1 bis 10 Gew.-% eines oder mehrerer unterschiedlicher nichtsiloxanhaltiger Polymere enthalten.

Weitere insbesondere bevorzugte erfindungsgemäße Zusammensetzungen sind Wasch- oder Reinigungsmittel.

Ein Vorteil dieser Wasch- oder Reinigungsmittel ist, dass sie neben der Wasch- oder Reinigungseigenschaft auch einen Textil-pflegenden Effekt aufweisen ("2in1"-Wasch- oder Reinigungsmittel). Der Anwender benötigt für diese Kombination nicht zwei Mittel (Wasch- oder Reinigungsmittel und Weichspüler). Weiterhin ist kein separater Spülgang zur Weichspülung erforderlich.

Die erfindungsgemäßen Wasch- oder Reinigungsmittel können weitere Inhaltsstoffe enthalten, die die anwendungstechnischen und/oder ästhetischen Eigenschaften des Wasch- oder Reinigungsmittels weiter verbessern. Diese weiteren Inhaltsstoffe können ausgewählt sein aus der Gruppe der Tenside, Gerüststoffe, Bleichmittel, Bleichaktivatoren, Enzyme, Parfüme, Parfümträger, Fluoreszenzmittel, Farbstoffe, Schauminhibitoren, Silikonöle, Antiredepositionsmittel, optischen Aufheller, Vergrauungsinhibitoren, Einlaufverhinderer, Knitterschutzmittel, Farbübertragungsinhibitoren, antimikrobiellen Wirkstoffe, Germizide, Fungizide, Antioxidantien, Konservierungsmittel, Korrosionsinhibitoren, Antistatika, Bittermittel, Bügelhilfsmittel, Phobier- und Imprägniermittel, Quell- und Schiebefestmittel, neutrale Füllsalze sowie UV-Absorber. Insbesondere können die erfindungsgemäßen Zusammensetzungen zwischen 0,001 und 90, besonders bevorzugt 0,01 bis 45 Gew.-% bezogen auf die Gesamtmasse der Wasch- oder Reinigungsmittel eines oder mehrerer der hier genannten weiteren Inhaltsstoffe enthalten.

Beispiele für einsetzbare Tenside werden in der WO 2007/115872 (US2006042766), Seite 17, Zeile 28 bis Seite 21, Zeile 24 beschreiben. Beispiele für Gerüststoffe, Builder, Bleichmittel, Bleichaktivatoren, Bleichkatalysatoren und Enzymen werden in der WO 2007/115872, Seite 22, Zeile 7 bis Seite 25, Zeile 26 beschreiben. Antiredepositionsmittel, optischen Aufheller, Vergrauungsinhibitoren, Farbübertragungsinhibitoren werden beispielhaft in der WO 2007/115872 auf Seite 26, Zeile 15 bis Seite 28, Zeile 2 beschrieben. Beispiele von Knitterschutzmittel, antimikrobiellen Wirkstoffe, Germizide, Fungizide, Antioxidantien, Konservierungsmittel, Antistatika, Bügelhilfsmittel, UV-Absorber werden in der WO 2007/115872 auf den Seiten 28, Zeile 14 bis Seite 30, Zeile 22 beispielhaft beschrieben.

Weitere bevorzugte erfindungsgemäße Zusammensetzungen sind Haarpflegesysteme.

Die erfindungsgemäßen Haarpflegesysteme enthalten weitere Inhaltsstoffe. Je nach Anwendungszweck sind solche Mittel enthaltend 2 bis 25 Gew.-% eines oder mehrerer waschaktiver Tenside aus der Gruppe der anionischen, nichtionischen, amphoteren oder zwitterionischen Tenside, 0,5 bis 10 Gew.-% eines oder mehrerer Emulgatoren, 0,5 bis 10 Gew.-% eines oder mehrerer Konsistenzgeber, 0,5 bis 10 Gew.-% eines oder mehrerer vorzugsweise kationischer Tenside oder Emulgatoren, 0,5 bis 20 Gew.-% eines oder mehrerer kosmetischer Öle, Siliconöle oder Emollients sowie übliche Hilfs- und Zusatzstoffe in üblichen Konzentrationen, und zusätzlich enthaltend ein oder mehrere haarkosmetische Wirkstoffe, ausgesucht aus der Gruppe der kationischen Polymere wie zum Beispiel quaternierte Cellulose und dessen Derivate, Chitosan und dessen Derivate, kationische Alkylglycoside, kationische Guar-Derivate, Polymere aus Dimethyldiallylammoniumsalzen und deren Copolymere mit Estern und Amiden von Acrylsäure und Methacrylsäure, Copolymere des Vinylpyrrolidons mit quaternierten Derivaten des Dialkylaminoalkylacrylats und -methacrylats, wie beispielsweise mit Diethylsulfat quaternierte Vinylpyrrolidon-Dimethylaminoethylmethacrylat-Copolymere, Vinylpyrrolidon-Vinylimidazoliummethochlorid-Copolymere, Terpolymere aus den Monomeren Vinylpyrrolidon, Caprolactam und Acrylamiden, quaternierter Polyvinylalkohol sowie solche Polymere die unter den INCI-Bezeichnungen Polyquaternium-2, Polyquaternium-17, Polyquaternium-18, Polyquaternium-27 und Polyquaternium-37 bekannt sind, kationische oder nichtionische Proteinhydrolysate pflanzlichen oder tierischen Ursprungs auf Basis Keratin, Collagen, Elastin, Weizen, Reis, Soja, Milch, Seide, Mais oder weitere Siliconderivate, wie zum Beispiel Dimethiconol oder Dimethicone (INCI Bezeichnungen für Polydimethylsiloxane) sowie modifizierte Silicone, die terminal funktionalisiert (INCI Vorsilbe Bis-) und/oder pfropf-funktionalisiert sein können, als da sind beispielsweise Alkoxysilicone und Alkylsilicone mit langkettigen Alkylgruppen, polyoxyalkylmodifizierte Silicone wie PEG/PPG-3/10 Dimethicone oder Bis-PEG/PPG-20/20 Dimethicone mit oder ohne Alkylethergruppe und deren Ester, wie zum Beispiel Dimethicone PEG-7 Cocoate sowie multifunktionalisierte Silicone wie zum Beispiel Cetyl PEG/PPG-10/1 Dimethicone oder Methyleugenyl PEG-8 Dimethicone, darüber hinaus Siliconcopolymere mit Acrylaten, einschließlich solcher Copolymere mit und ohne Alkylmodifizierung, verzweigte Siliconderivate wie Dimethicone/Silsesquioxane Copolymer, vernetzte Siliconcopolymere wie Dimethicone Crosspolymer, Alkyl Dimethicone/Divinyldimethicone Crosspolymer, Cetearyl Dimethicone Crosspolymer oder Cetearyl Dimethicone/Vinyl Dimethicone Crosspolymer, aminofunktionalisierte Silicone wie Amodimethicone, Aminopropyl Dimethicone, PEG-7 Amodimethicone, Methoxy PEG/PPG-7/3 Aminopropyl Dimethicone oder ionisch modifizierter Silicone wie Dimethicone Propyl PG-Betaine, Vitamine, Panthenol, Pyrrolidoncarbonsäure, Bisabolol, Pflanzenextrakte, Kreatin, Ceramide sowie UV-absorbierende Mittel.

Unter Textil-pflegend wird in diesem Zusammenhang verstanden, dass die behandelten textilen Flächengebilden einen vorteilhaften Effekt erhalten, wie beispielsweise einen Textil-weichmachenden Effekt, Knitterfestigkeit bzw. die schädliche oder negative Effekte, die beim Reinigen und/oder Konditionieren und/oder Tragen auftreten können, wie beispielsweise Verblassen, Vergrauung, usw., reduziert werden. Bevorzugterweise wird unter Textil-pflegend ein Textilweichmachender Effekt verstanden, wie dieser für Weichspüler bekannt ist.

Ein weiterer Gegenstand der Erfindung ist die Verwendung der erfindungsgemäßen Verbindungen der Formel (1) bzw. der erfindungsgemäßen Verfahrensprodukte in Textil-pflegenden Zusammensetzungen, insbesondere in Textil-weichmachenden Zusammensetzungen (Weichspüler).

Ein Vorteil der erfindungsgemäßen Verwendung als Weichmacher ist, dass der Weichmacher den damit behandelten Flächengebilden hydrophile Eigenschaften verleihen kann.

Insbesondere verleihen die erfindungsgemäßen Verbindungen der Formel (1) den Flächengebilden hydrophile Eigenschaften bei gleichzeitiger Erzielung eines guten Weichgriffs.

Ebenfalls Gegenstand der Erfindung ist die die Verwendung der erfindungsgemäßen Verbindungen der Formel (1) bzw. der erfindungsgemäßen Verfahrensprodukte in Wasch- oder Reinigungsmitteln.

Ein Vorteil der erfindungsgemäßen Verwendung in Wasch- oder Reinigungsmitteln ist, dass ein Textil-pflegendes Wasch- oder Reinigungsmittel ("2in1"- Wasch- oder Reinigungsmittel) zur Verfügung gestellt wird und es nicht notwendig ist zwei Mittel (Wasch- oder Reinigungsmittel und Weichspüler) zu dosiere. Weiterhin vorteilhaft ist, dass kein separater Spülgang notwendig ist.

Ein weiterer Gegenstand der Erfindung ist die Verwendung der erfindungsgemäßen Verbindungen der Formel (1), als Weichmacher für Flächengebilde. Bevorzugte Flächengebilde sind beispielsweise ausgewählt aus der Gruppe umfassend Gewebe, textile Gewebe, Gewirke, Gestricke, Non-wovens, Tissue (Papierfaser) und/oder Fasern aus natürlichen und/oder synthetischen Rohstoffen und/oder Leder und/oder Haare und/oder Fell. Es kann vorteilhaft sein, wenn der Weichmacher ein sogenannter permanenter Weichmacher ist.

Es ist ein weiterer Gegenstand der Erfindung ist die Verwendung der erfindungsgemäßen Verbindungen der Formel (1) bzw. der erfindungsgemäßen Verfahrensprodukte in Haarpflegesysteme, die in der Lage sind, sowohl Eigenschaften wie Kämmbarkeit, Weichheit, Volumen, Formbarkeit, Handhabbarkeit, die Entwirrbarkeit von ungeschädigten und geschädigten Haaren zu verbessern, und/oder auch dem Haar einen schönen Glanz zu verleihen. Die Verbindungen sollen also eine verbesserte oder zumindest gleich gute Einzelwirkung, insgesamt aber eine verbesserte kombinierte Wirkung von mechanischen und anderen Eigenschaften zeigen.

Besondere erfindungsgemäße Haarpflegesysteme sind Haarbehandlungsmittel und Haarnachbehandlungsmittel zum Ausspülen oder zum Verbleib im Haar, beispielsweise in Shampoos mit oder ohne ausgeprägte Konditionierwirkung, Konditionierern, 2in1-Shampoos, Spülungen, Haarkuren, Haarmasken, Frisierhilfen, Stylingmittel, Fönlotionen, Haarfestiger, Dauerwellmittel, Haarglättungsmittel und/oder Mitteln zum Färben der Haare.

Die erfindungsgemäßen Verbindungen, Verfahren, Zusammensetzungen sowie die Verwendung der Verbindungen und Zusammensetzungen werden beispielhaft beschrieben, ohne dass die Erfindung auf diese beispielhaften Ausführungsformen beschränkt sein soll. Sind Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Werden Gehaltsangaben (ppm oder %) gemacht, so handelt es sich, wenn nicht anders angegeben, um Angaben in Gewichts-% oder Gewichts-ppm (wppm). Bei Zusammensetzungen beziehen sich die Gehaltsangaben, wenn nicht anders angegeben auf die Gesamtzusammensetzung. Werden nachfolgend Mittelwerte angegeben, so handelt es sich, wenn nicht anders angegeben um Zahlenmittel. Werden Molmassen verwendet, handelt es sich, wenn nicht ausdrücklich anders vermerkt um gewichtsmittlere Molmassen Mw. Werden im Umfang dieser Erfindung Werte für Viskositäten angegeben, handelt es sich falls nicht anders vermerkt um dynamische Viskositäten, die mit dem Fachmann geläufigen Methoden ermittelt werden können. Werden im Umfang dieser Erfindung Werte für Parameter angegeben, deren Methoden in den Beispielen erläutert werden, so sind diese Methoden verallgemeinert als Teil der Beschreibung anzunehmen. Werden nachfolgend Messwerte angegeben, so wurden diese Messwerte, wenn nicht anders angegeben, bei einem Druck von 1013,25 hPa und einer Temperatur von 25°C ermittelt.

Weitere Ausgestaltungen und Gegenstände der Erfindung ergeben sich aus den Ansprüchen, deren Offenbarungsgehalt vollumfänglich Gegenstand dieser Beschreibung ist.

### Beispiele:

Verwendete Chemikalien: N,N-Dimethylaminopropylamin (99%) und Diethylentriamin (99%) wurden von Sigma-Aldrich bezogen. Hexylamin (98%) und Epichlorhydrin (≥ 99%) wurden von Fluka bezogen. Doppelmetallcyanidkatalysator wurde von Bayer AG. Propylenoxid wurde von GHC Gerling, Holz & CO Handels GmbH bezogen.

### GPC-Messungen:

GPC-Messungen zur Bestimmung der Polydispersität und gewichtsmittleren Molmassen Mw wurden unter den folgenden Messbedingungen durchgeführt: Säulenkombination SDV 1000/10000 Å (Länge 65 cm), Temperatur 30 °C, THF als mobile Phase, Fließrate 1 ml/min, Probenkonzentration 10 g/l, RI-Detektor, Auswertung der chlorhaltigen Polyether erfolgte gegen Polypropylenglykol-Standard (76-6000 g/mol), Auswertung der chlorhaltigen Polyethersiloxane gegen Polystyrol-Standard (162-2570000 g/mol).

Bestimmung des Gehalts an Chlor und Doppelbindungen: Die Bestimmung des Gehalts an Chlor und Doppelbindungen erfolgte mit Hilfe der ¹³C-NMR-Spektroskopie. Verwendet wurde ein NMR Spektrometer vom Typ Bruker Avance 400, die Proben wurden dazu in CDCl₃ gelöst.

### Bestimmung des SiH-Gehaltes:

Die Bestimmungen der SiH-Werte der eingesetzten Wasserstoffsiloxane aber auch die der Reaktionsgemische erfolgen jeweils gasvolumetrisch durch die Natriumbutylat induzierte Zersetzung aliquot eingewogener Probenmengen an einer Gasbürette. Eingesetzt in die allgemeine Gasgleichung gestatten die gemessenen Wasserstoffvolumina die Gehaltsbestimmung aktiver SiH-Funktionen in den Edukten aber auch in den Reaktionsansätzen und erlauben so die Umsatzkontrolle.

### Bestimmung der Iodzahl (IZ):

Iodzahlen wurden nach der Methode DGF C-V 11 a (53) der Deutschen Gesellschaft für Fettwissenschaft bestimmt. Dabei wurden die Proben mit lodmonobromid umgesetzt, wobei der Überschuss durch Zugabe von Kaliumiodid in lod überführt wurde, das zurücktitriert wurde.

Die eingesetzten Karstedt-Lösungen waren Platin(0)-Divinyltetramethyldisiloxankomplexe in Decamethylcyclopentasiloxan in der Konzentration von 0,1 Gew. % Platin (erhältlich bei Umicore mit 21,37 Gew. % Platin, welches durch Verdünnen mit Decamethylcyclopentasiloxan auf 0,1 Gew. % Pt eingestellt wird). Die in den folgenden Beispielen angegebenen Dosierungen des Katalysators beziehen sich auf die Massensumme der Einwaagen der Reaktionskomponenten der Hydrosilylierung, zugesetzte Lösemittel werden in dieser Berechnung nicht berücksichtigt.

### Beispiel 1: Synthesebeispiel

### Beispiel A: Herstellung von Epichlorhydrin-Alkoxylierungspodukten.

### Beispiel A1: Vorprodukt PE 1:

In einem 5 Liter Autoklaven wurden als Starter 1109 g Poly(oxypropylen)-co-poly(oxyethylen)monoallylether mit der massenmittleren Molmasse Mw = 780 g/mol und 1,5 g Zinkhexacyanocobaltat-DMC-Katalysator vorgelegt und unter Rühren auf 130 °C aufgeheizt. Der Reaktor wurde bis auf einen Innendruck von 30 mbar evakuiert, um evtl. vorhandene flüchtige Inhaltsstoffe destillativ zu entfernen. Zur Aktivierung des DMC-Katalysators wurde eine Portion von 75 g Propylenoxid zugeführt. Nach Anspringen der Reaktion und Innendruckabfall wurden unter Kühlen zunächst weitere 332 g Propylenoxid zudosiert. Anschließend wurden unter gleichen Bedingungen 814 g Propylenoxid und 259 g Epichlorhydrin im Gemisch innerhalb von 60 min bei 130 °C und max. 2,7 bar Reaktorinnendruck zudosiert. Es schloss sich eine 30-minütige Nachreaktion bei 130 °C an, in deren Verlauf der Reaktorinnendruck auf 0,5 bar sank. Abschließend wurden als Endblock weitere 407 g Propylenoxid bei 130 °C addiert. Nach einer erneuten Nachreaktion bei den gleichen Bedingungen folgte eine Entgasungsstufe. Dabei wurden flüchtige Anteile wie restliches Propylenoxid und Epichlorhydrin im Vakuum bei 130 °C abdestilliert. Das fast farblose, niedrig viskose chlorhaltige Alkoxylierungsprodukt wurde auf unter 90 °C abgekühlt und aus dem Reaktor abgelassen. Das Produkt hatte It. GPC eine gewichstmittlere Molmasse von 1867 g/mol, eine Polydispersität Mw/Mn von 1,21 und enthielt It. 13C-NMR-Analyse 2 mol Cl pro Molekül, IZ= 11,9.

### Beispiel A2: Vorprodukt PE 2:

In einem 5 Liter Autoklaven wurden als Starter 685,6 g Poly(oxyethylen)monoallylether (massenmittlere Molmasse Mw = 380 g/mol) und 1,5 g Zinkhexacyanocobaltat-DMC-Katalysator vorgelegt und unter Rühren auf 130 °C aufgeheizt. Der Reaktor wurde bis auf einen Innendruck von 30 mbar evakuiert, um evtl. vorhandene flüchtige Inhaltsstoffe destillativ zu entfernen. Zur Aktivierung des DMC-Katalysators wurde eine Portion von 60 g Propylenoxid zugeführt. Nach Anspringen der Reaktion und Innendruckabfall werden unter Kühlen zunächst weitere 454 g Propylenoxid zudosiert. Anschließend wurden unter gleichen Bedingungen 1029 g Propylenoxid und 327 g Epichlorhydrin im Gemisch innerhalb von 2,5 Stunden bei 130 °C und max. 2,9 bar Reaktorinnendruck zudosiert. Es schloss sich eine 45-minütige Nachreaktion bei 130 °C an. Abschließend wurden als Endblock weitere 514 g Propylenoxid bei 130 °C addiert. Nach einer erneuten Nachreaktion folgte eine Entgasungsstufe im Vakuum bei 130 °C. Das fast farblose niedrig viskose chlorhaltige Alkoxylierungsprodukt wurde auf unter 90 °C abgekühlt und aus dem Reaktor abgelassen. Das Produkt hatte It. GPC eine gewichtsmittlere Molmasse von 1556 g/mol, eine Polydispersität Mw/Mn von 1,18 und enthielt It. 13C-NMR-Analyse 2 mol Cl pro Molekül, IZ= 15.

### Beispiel A3: Vorprodukt PE 3:

In einem 5 Liter Autoklaven wurden als Starter 615,6 g Poly(oxypropylen)-co-poly(oxyethylen)monoallylether mit der massenmittleren Molmasse Mw = 780 g/mol und 2,25 g Zinkhexacyanocobaltat-DMC-Katalysator vorgelegt und unter Rühren auf 130 °C aufgeheizt. Der Reaktor wurde bis auf einen Innendruck von 30 mbar evakuiert, um evtl. vorhandene flüchtige Inhaltsstoffe destillativ zu entfernen. Zur Aktivierung des DMC-Katalysators wurde eine Portion von 75 g Propylenoxid zugeführt. Nach Anspringen der Reaktion und Innendruckabfall wurden unter Kühlen zunächst weitere 155 g Propylenoxid zudosiert. Anschließend wurden unter gleichen Bedingungen 1469 g Propylenoxid und 439 g Epichlorhydrin im Gemisch innerhalb von 60 min bei 130 °C und max. 2,7 bar Reaktorinnendruck zudosiert. Es schloss sich eine 30-minütige Nachreaktion bei 130 °C an, in deren Verlauf der Reaktorinnendruck auf 0,5 bar sank. Abschließend wurden als Endblock weitere 230 g Propylenoxid bei 130 °C addiert. Nach einer erneuten Nachreaktion bei den gleichen Bedingungen folgte eine Entgasungsstufe. Dabei wurden flüchtige Anteile wie restliches Propylenoxid und Epichlorhydrin im Vakuum bei 130 °C abdestilliert. Das fast farblose, niedrig viskose chlorhaltige Alkoxylierungsprodukt wurde auf unter 90 °C abgekühlt und aus dem Reaktor abgelassen. Das Produkt hatte It. GPC eine gewichstmittlere Molmasse von 2754 g/mol, eine Polydispersität Mw/Mn von 1,28 und enthielt It. 13C-NMR-Analyse 6 mol Cl pro Molekül, IZ= 6,9 g lod/100g.

### Beispiel A4: Vorprodukt PE 4 :

In einem 5 Liter Autoklaven wurden als Starter 1100 g Poly(oxypropylen)-co-poly(oxyethylen)monoallylether mit der massenmittleren Molmasse Mw = 780 g/mol und 1,81 g Zinkhexacyanocobaltat-DMC-Katalysator vorgelegt und unter Rühren auf 130 °C aufgeheizt. Der Reaktor wurde bis auf einen Innendruck von 30 mbar evakuiert, um evtl. vorhandene flüchtige Inhaltsstoffe destillativ zu entfernen. Zur Aktivierung des DMC-Katalysators wurde eine Portion von 75 g Propylenoxid zugeführt. Nach Anspringen der Reaktion und Innendruckabfall wurden unter Kühlen zunächst weitere 334 g Propylenoxid zudosiert. Anschließend wurden unter gleichen Bedingungen 818 g Propylenoxid, 508 g Butylenoxid und 391 g Epichlorhydrin im Gemisch innerhalb von 60 min bei 130 °C und max. 2,7 bar Reaktorinnendruck zudosiert. Es schloss sich eine 30-minütige Nachreaktion bei 130 °C an, in deren Verlauf der Reaktorinnendruck auf 0,5 bar sank. Abschließend wurden als Endblock weitere 409 g Propylenoxid bei 130 °C addiert. Nach einer erneuten Nachreaktion bei den gleichen Bedingungen folgte eine Entgasungsstufe. Dabei wurden flüchtige Anteile wie restliches Propylenoxid und Epichlorhydrin im Vakuum bei 130 °C abdestilliert. Das fast farblose, niedrig viskose chlorhaltige Alkoxylierungsprodukt wurde auf unter 90 °C abgekühlt und aus dem Reaktor abgelassen. Das Produkt hatte It. GPC eine gewichstmittlere Molmasse von 2260 g/mol, eine Polydispersität Mw/Mn von 1,2 und enthielt It. 13C-NMR-Analyse 3 mol Cl pro Molekül, IZ= 9,6.

### Beispiel B: Herstellung von chlorhaltigen Polyethersiloxan-Copolymeren mittels Hydrosilylierung.

### Beispiel B1: Vorprodukt PES 1:

In einem Mehrhalskolben mit KPG-Blatt-Rührer, Rückflusskühler, Inertgaszuleitung und Temperaturfühler wurden 199,9 g des chlorhaltigen Allylpolyethers PE 2 (JZ=15) vorgelegt und erwärmt. Nach der Zugabe von 15 ppm eines WK-katalysators bei 60° C wurde das Reaktionsgemisch weiter auf 70 °C erwärmt und mittels eines Tropftrichters mit 100,1 g eines Wasserstoffsiloxans der Formel MH1 D28 MH1 (0,9 SiH eq/kg) versetzt. Dann wurde auf 80 °C Reaktionstemperatur erhitzt und die Exothermie wurde so abgefangen, dass die Reaktionstemperatur von 90 °C nicht überschritten wurde. Nach einer Stunde konnte kein freies SiH mehr nachgewiesen werden, der Umsatz war vollständig. ²⁹Si-NMR und ¹³C-NMR spektroskopische Untersuchung lieferte die erwarteten Werte.

### Beispiel B2: Vorprodukt PES 2:

In einem Mehrhalskolben mit KPG-Blatt-Rührer, Rückflusskühler, Inertgaszuleitung und Temperaturfühler wurden 144,48 g des chlorhaltigen Allylpolyethers PE 2 (JZ=15) vorgelegt und erwärmt. Nach der Zugabe von 15 ppm eines WK-katalysators bei 67 °C wurde mittels eines Tropftrichters mit 160,86 g eines Wasserstoffsiloxans der Formel MH1 D68 MH1 (0,39 SiH eq/kg) versetzt. Dann wurde auf 80 °C Reaktionstemperatur erhitzt und die Exothermie wurde so abgefangen, dass diese Reaktionstemperatur nicht überschritten wird. Nach 4 Stunden wurde die Vollständigkeit des Reaktionumsatzes mittels SiH-Wertbestimmung festgestellt. ²⁹Si-NMR und ¹³C-NMR spektroskopische Untersuchung lieferte die erwarteten Werte.

### Beispiel B3: Vorprodukt PES 3:

In einem Mehrhalskolben mit KPG-Blatt-Rührer, Rückflusskühler, Inertgaszuleitung und Temperaturfühler wurden 221,78 g des chlorhaltigen Allylpolyethers PE 2 (JZ=15) vorgelegt und erwärmt. Nach der Zugabe von 15 ppm eines WK-katalysators bei 60° C wurde das Reaktionsgemisch weiter auf 70 °C erwärmt und mittels eines Tropftrichters mit 95,4 g eines Wasserstoffsiloxans der Formel M D'2,3 D25,7 M (1,04 SiH eq/kg) versetzt. Dann wurde auf 80 °C Reaktionstemperatur erhitzt und die Exothermie wird so abgefangen, dass die Reaktionstemperatur von 90 °C nicht überschritten wurde. Nach einer Stunde wurde die Vollständigkeit des Reaktionsumsatzes mittels SiH-Wertbestimmung festgestellt. ²⁹Si-NMR und ¹³C-NMR spektroskopischen Untersuchungen lieferten die erwarteten Werte.

### Beispiel B4: Vorprodukt PES 4:

In einem Mehrhalskolben mit KPG-Blatt-Rührer, Rückflusskühler, Inertgaszuleitung und Temperaturfühler wurden 151,5 g des chlorhaltigen Allylpolyethers PE 2 (JZ =15) vorgelegt und erwärmt. Nach der Zugabe von 15 ppm eines WK-katalysators bei 60° C wurde das Reaktionsgemisch weiter auf 70 °C erwärmt und mittels eines Tropftrichters mit 198,47 g eines Wasserstoffsiloxans der Formel MH1 D78 MH1 (0,34 SiH eq/kg) versetzt. Dann wurde auf 80 °C Reaktionstemperatur erhitzt und die Exothermie wird so abgefangen, dass diese Reaktionstemperatur nicht überschritten wurde. Nach einer Stunde konnte kein freies SiH mehr nachgewiesen werden, der Umsatz war vollständig. ²⁹Si-NMR und ¹³C-NMR spektroskopischen Untersuchungen lieferten die erwarteten Werte.

### Beispiel B5: Vorprodukt PES 5:

In einem Mehrhalskolben mit KPG-Blatt-Rührer, Rückflusskühler, Inertgaszuleitung und Temperaturfühler wurden 135,91 g des chlorhaltigen Allylpolyethers PE 1 (JZ= 11,9) vorgelegt und erwärmt. Nach der Zugabe von 15 ppm eines WK-katalysators bei 60° C wurde das Reaktionsgemisch weiter auf 70 °C erwärmt und mittels eines Tropftrichters mit 200 g eines Wasserstoffsiloxans der Formel MH1 D98 MH1 (0,28 SiH eq/kg) versetzt. Dann wurde auf 80 °C Reaktionstemperatur erhitzt und die Exothermie wurde so abgefangen, dass diese Reaktionstemperatur nicht überschritten wurde. Nach acht Stunden konnte kein freies SiH mehr nachgewiesen werden, der Umsatz war vollständig.

### Beispiel B6: Vorprodukt PES 6:

In einem Mehrhalskolben mit KPG-Blatt-Rührer, Rückflusskühler, Inertgaszuleitung und Temperaturfühler wurden 48,7 g des chlorhaltigen Allylpolyethers PE 2 (JZ= 15) vorgelegt und erwärmt. Nach der Zugabe von 22,5 ppm eines WK-katalysators bei 50° C wurde das Reaktionsgemisch weiter auf 70 °C erwärmt und mittels eines Tropftrichters mit 114 g eines Wasserstoffsiloxans der Formel MH1 D69 (0,19 SiH eq/kg) versetzt. Dann wurde auf 80 °C Reaktionstemperatur erhitzt und die Exothermie wurde so abgefangen, dass diese Reaktionstemperatur nicht überschritten wurde. Nach 10 Stunden konnte kein freies SiH mehr nachgewiesen werden, der Umsatz war vollständig.

### Beispiel B7: Vorprodukt PES 7:

In einem Mehrhalskolben mit KPG-Blatt-Rührer, Rückflusskühler, Inertgaszuleitung und Temperaturfühler wurden 151,48 g des chlorhaltigen Allylpolyethers PE 2 (JZ= 15) vorgelegt und erwärmt. Nach der Zugabe von 15 ppm eines WK-katalysators bei 50° C wurde das Reaktionsgemisch weiter auf 70 °C erwärmt und mittels eines Tropftrichters mit 100 g eines Wasserstoffsiloxans der Formel PhSi (D19 MH1) (0,9 SiH eq/kg) versetzt. Dann wurde auf 80 °C Reaktionstemperatur erhitzt und die Exothermie wurde so abgefangen, dass diese Reaktionstemperatur nicht überschritten wurde. Nach 1,5 Stunden konnte kein freies SiH mehr nachgewiesen werden, der Umsatz war vollständig.

### Beispiel B8 : Vorprodukt PES8:

In einem Mehrhalskolben mit KPG-Blatt-Rührer, Rückflusskühler, Inertgaszuleitung und Temperaturfühler werden 226,37 g des chlorhaltigen Allylpolyethers PE 1 (JZ= 6,9) vorgelegt und erwärmt. Nach der Zugabe von 15 ppm eines WK-katalysators bei 60° C wird das Reaktionsgemisch weiter auf 70 °C erwärmt und mittels eines Tropftrichters mit 103,62 g eines Wasserstoffsiloxans der Formel MH1 D28 MH1 (0,9 SiH eq/kg) versetzt. Dann wird auf 80 °C Reaktionstemperatur erhitzt und die Exothermie wird so abgefangen, dass diese Reaktionstemperatur nicht überschritten wird. Nach acht Stunden konnte kein freies SiH mehr nachgewiesen werden, der Umsatz war vollständig. ²⁹Si-NMR und ¹³C-NMR spektroskopische Untersuchung lieferte die erwarteten Werte.

### Beispiel B9 : Vorprodukt PES 9:

In einem Mehrhalskolben mit KPG-Blatt-Rührer, Rückflusskühler, Inertgaszuleitung und Temperaturfühler werden 181,4 g des chlorhaltigen Allylpolyethers PE 4 (JZ= 9,6) vorgelegt und erwärmt. Nach der Zugabe von 15 ppm eines WK-katalysators bei 60° C wird das Reaktionsgemisch weiter auf 70 °C erwärmt und mittels eines Tropftrichters mit 68,6 g eines Wasserstoffsiloxans der Formel MH1 D28 MH1 (0,9 SiH eq/kg) versetzt. Dann wird auf 80 °C Reaktionstemperatur erhitzt und die Exothermie wird so abgefangen, dass diese Reaktionstemperatur nicht überschritten wird. Nach acht Stunden konnte kein freies SiH mehr nachgewiesen werden, der Umsatz war vollständig. ²⁹Si-NMR und ¹³C-NMR spektroskopische Untersuchung lieferte die erwarteten Werte.

### Beispiel C: Umsetzung chlorhaltiger Polyethersiloxan-Copolymere mit Aminen

### Beispiel C1:

In einem Mehrhalskolben mit KPG-Blatt-Rührer, Rückflusskühler, Inertgaszuleitung und Temperaturfühler wurden 100 g des chlorhaltigen Polyethersiloxans PES 4 und 21 g von N,N-Dimethylpropylaminopropylamin (DMAPA) vorgelegt und unter Rühren auf 140 °C erwärmt. Nach 10 Stunden Reaktionszeit wurde das überschüssige Amin am Rotationsverdampfer (T= 105 °C, p<0,1 mbar) entfernt. Nach dem Filtrieren mittels einer Druckfilterpresse erhielt man ein klares leicht gelbes flüssiges Produkt. Die vollständige Substitution des Chlors wurde mittels ¹³C-NMR nachgewiesen.

### Beispiel C2:

In einem Mehrhalskolben mit KPG-Blatt-Rührer, Rückflusskühler, Inertgaszuleitung und Temperaturfühler wurden 100 g des chlorhaltigen Polyethersiloxans PES 1 und 32 g von DMAPA vorgelegt und unter Rühren auf 140 °C erwärmt. Nach 10 Stunden Reaktionszeit wurde das überschüssige Amin am Rotationsverdampfer (T= 105 °C, p= 2,5 mbar) entfernt. Nach dem Filtrieren mittels einer Druckfilterpresse erhielt man ein klares leicht gelbes flüssiges Produkt. Die vollständige Substitution des Chlors wurde mittels ¹³C-NMR nachgewiesen.

### Beispiel C3:

In einem Mehrhalskolben mit KPG-Blatt-Rührer, Rückflusskühler, Inertgaszuleitung und Temperaturfühler wurden 100 g des chlorhaltigen Polyethersiloxans PES 6 und 14,7 g von DMAPA vorgelegt und unter Rühren auf 135 °C erwärmt. Nach 10 Stunden Reaktionszeit wurde das überschüssige Amin am Rotationsverdampfer (T= 105 °C, p<0,1 mbar) entfernt. Nach dem Filtrieren mittels einer Druckfilterpresse erhielt man ein klares leicht gelbes flüssiges Produkt. Die vollständige Substitution des Chlors wurde mittels ¹³C-NMR nachgewiesen.

### Beispiel C4:

In einem Mehrhalskolben mit KPG-Blatt-Rührer, Rückflusskühler, Inertgaszuleitung und Temperaturfühler wurden 100 g des chlorhaltigen Polyethersiloxans PES 2 und 22 g DMAPA vorgelegt und unter Rühren auf 140 °C erwärmt. Nach 10 Stunden Reaktionszeit wurde das überschüssige Amin am Rotationsverdampfer (T= 105 °C, p=2,4 mbar) entfernt. Nach dem Filtrieren mittels einer Druckfilterpresse erhielt man ein klares leicht gelbes flüssiges Produkt. Die vollständige Substitution des Chlors wurde mittels ¹³C-NMR nachgewiesen.

### Beispiel C5:

In einem Mehrhalskolben mit KPG-Blatt-Rührer, Rückflusskühler, Inertgaszuleitung und Temperaturfühler wurden 100 g des chlorhaltigen Polyethersiloxans PES 3 und 34 g DMAPA vorgelegt und unter Rühren auf 135 °C erwärmt. Nach 10 Stunden Reaktionszeit wurde das überschüssige Amin am Rotationsverdampfer (T= 105 °C, p<0,1 mbar) entfernt. Nach dem Filtrieren mittels einer Druckfilterpresse erhielt man ein klares leicht gelbes flüssiges Produkt. Die vollständige Substitution des Chlors wurde mittels ¹³C-NMR nachgewiesen.

### Beispiel C6:

In einem Mehrhalskolben mit KPG-Blatt-Rührer, Rückflusskühler, Inertgaszuleitung und Temperaturfühler wurden 100 g des chlorhaltigen Polyethersiloxans PES 7 und 28,2 g DMAPA vorgelegt und unter Rühren auf 140 °C erwärmt. Nach 10 Stunden Reaktionszeit wurde das überschüssige Amin am Rotationsverdampfer (T= 105 °C, p=2,4 mbar) entfernt. Nach dem Filtrieren mittels einer Druckfilterpresse erhielt man ein klares leicht gelbes flüssiges Produkt. Die vollständige Substitution des Chlors wurde mittels ¹³C-NMR nachgewiesen.

### Beispiel C7:

In einem Mehrhalskolben mit KPG-Blatt-Rührer, Rückflusskühler, Inertgaszuleitung und Temperaturfühler wurden 200 g des chlorhaltigen Polyethersiloxans PES 5 und 35,42 g DMAPA vorgelegt und unter Rühren auf 140 °C erwärmt. Nach 10 Stunden Reaktionszeit wurde das überschüssige Amin am Rotationsverdampfer (T= 105 °C, p=2,4 mbar) entfernt. Nach dem Filtrieren mittels einer Druckfilterpresse erhielt man ein klares leicht gelbes flüssiges Produkt. Die vollständige Substitution des Chlors wurde mittels ¹³C-NMR nachgewiesen.

### Beispiel C8:

In einem Mehrhalskolben mit KPG-Blatt-Rührer, Rückflusskühler, Inertgaszuleitung und Temperaturfühler wurden 100 g des chlorhaltigen Polyethersiloxans PES 4 und 20,13 g n-Hexylamin vorgelegt und unter Rühren auf 130 °C erwärmt. Nach 7 Stunden Reaktionszeit wurde das überschüssige Amin am Rotationsverdampfer (T= 105 °C, p=2,4 mbar) entfernt. Nach dem Filtrieren mittels einer Druckfilterpresse erhielt man ein klares leicht gelbes flüssiges Produkt. Die vollständige Substitution des Chlors wurde mittels ¹³C-NMR nachgewiesen.

### Beispiel C9:

In einem Mehrhalskolben mit KPG-Blatt-Rührer, Rückflusskühler, Inertgaszuleitung und Temperaturfühler wurden 100 g des chlorhaltigen Polyethersiloxans PES 1 und 31,87 g Diethylentriamin vorgelegt und unter Rühren auf 150 °C erwärmt. Nach 7 Stunden Reaktionszeit wurde das überschüssige Amin am Rotationsverdampfer (T= 105 °C, p=2,4 mbar) entfernt. Nach dem Filtrieren mittels einer Druckfilterpresse erhielt man ein klares leicht gelbes flüssiges Produkt. Die vollständige Substitution des Chlors wurde mittels ¹³C-NMR nachgewiesen.

### Beispiel C10:

In einem Mehrhalskolben mit KPG-Blatt-Rührer, Rückflusskühler, Inertgaszuleitung und Temperaturfühler wurden100 g des chlorhaltigen Polyethersiloxans PES 9 und 39,7 g Diethylentriamin vorgelegt und unter Rühren auf 150 °C erwärmt. Nach 8 Stunden Reaktionszeit wurde das überschüssige Amin am Rotationsverdampfer (T= 105 °C, p=2,4 mbar) entfernt. Nach dem Filtrieren mittels einer Druckfilterpresse erhielt man ein klares leicht gelbes flüssiges Produkt. Die vollständige Substitution des Chlors wurde mittels ¹³C-NMR nachgewiesen.

### Beispiel C11:

In einem Mehrhalskolben mit KPG-Blatt-Rührer, Rückflusskühler, Inertgaszuleitung und Temperaturfühler wurden 100 g des mit Aminogruppen funktionalisierten Polyethersiloxans aus Beispiel C2 vorgelegt und auf 90 °C erwärmt. 10,1 g Dimethylsulfat wurden unter Rühren innerhalb von 15 min zugegeben. Nach 45 Minuten Reaktionszeit wurde das flüssige und gelbliche quaternisierte Produkt auf 50 °C abgekühlt und abgefüllt. Die Methylierung an den Amingruppen wurde mittels ¹³C-NMR nachgewiesen.

### Beispiel C12:

In einem Mehrhalskolben mit KPG-Blatt-Rührer, Rückflusskühler, Inertgaszuleitung und Temperaturfühler wurden 100 g des mit Aminogruppen funktionalisierten Polyethersiloxans aus Beispiel C2 vorgelegt und auf 90 °C erwärmt. 5,1 g Essigsäure wurden unter Rühren innerhalb von 5 min zugegeben. Nach 15 Minuten Rühren wurde das flüssige und gelbliche, protonisierte Amingruppen aufweisende Produkt auf 50 °C abgekühlt und abgefüllt.

### Beispiel 2: Zusammensetzungen

### Z1: Allgemeine Formulierung:

5 bis 50 Gew.-% der erfindungsgemäßen Siloxane bzw. deren Lösungen werden in einem Becherglas mit Propellerrührer unter Rühren zu einer Mischung aus 1,25 bis 12,5 Gew.-% eines Laurylalkoholethoxylates mit einem Ethoxylierungsgrad von 6 - 10 oder einer Mischung mit verschiedenen Ethoxilierungsgraden, 0,05 bis 0,5 Gew.-% konzentrierter Essigsäure und 37,0 bis 93,7 Gew.-% Wasser gegeben.

### Z2: Formulierungsbeispiel (erfindungsgemäß):

20 Gew.-% des Produktes der Synthesebeispiele C1, C3 oder C4 werden in einem Becherglas mit Propellerrührer unter Rühren zu einer Mischung aus 8,0 Gew.-% eines Laurylalkoholethoxylates mit einem Ethoxylierungsgrad von 6 und 2,0 Gew,-% mit einem Ethoxilierungsgrad von 10, 0,4 Gew.-% konzentrierter Essigsäure und 69,6 Gew.-% Wasser gegeben. Man erhält eine weiße niedrigviskose Formulierung.

### Z3: Formulierungsbeispiel (nicht erfindungsgemäß):

Analog zur Herstellung der Formulierung nach Z2 wurde das Vergleichsprodukt hergestellt. Bei dem Vergleichsprodukt TEGO XP 6013 der Firma Evonikindustries handelt es sich um ein aminofunktionelles Siliconfluid, das als Weichgriffmittel für Fasern und Textilien angewendet werden kann.

### Z4: Formulierungsbeispiel (erfindungsgemäß):

20 Gew.-Teile eines Produkts der Synthesebeispiele C1, C2, C4 oder C5 wurden in einem Becherglas mit Propellerrührer unter Rühren vorgelegt. Anschließend wurden der Reihe nach 10 Gew.-Teile Dipropylenglykol, und 10 Gew.-Teile eines Fettalkoholethoxylates mit einem Ethoxylierungsgrad von 6 unter Rühren hinzu gegeben. Zuletzt wird mit Wasser auf 100 Gew.-Teile aufgefüllt und 15 min.nachgerührt.

### Z5: Formulierungsbeispiel (nicht erfindungsgemäß):

Analog zu Z4 wurden anstelle der erfindungsgemäßen Verbindungen TEGOSIVIN^{®} IE 11/59 (Mikroemulsion eines mit Aminogruppen funktionalisierten Siloxans mit 20% Aktivgehalt, Handelsname der Evonik Industries AG) sowie REWOQUAT® SQ 1 (kationisches Silikonderivat, Handelsname der Evonik Industries AG, INCI Bezeichnung Polyquaternium 80) verwendet.

### Beispiel 3: Anwendungen

### Applikationsbeispiele:

Zur Überprüfung des bei Anwendung der Aminopolyethersiloxane erzielbaren Griffes (haptische Bewertung) sowie auch der erreichbaren Hydrophilie wurden aus nativen Fasern bestehende Produkte gemäß folgendem Verfahren hiermit ausgerüstet:

### Ausziehverfahren:

### A1:

Zur Ausprüfung des Weichgriffs wurden Baumwollwirkware (165 g/m²)der Firma wfk Testgewebe GmbH (Christenfeld 10 41379 Brüggen) und Baumwollfrottierware (380 g/m²)der Firma Frottana Textil GmbH & Co KG (Waltersdorfer Str. 54 02779 Großschönau), in einer 0,025 %igen (basierend auf Wirkstoff) Flotte mit einem Flottenverhältnis von 1 zu 12 für 20 min unter leichter Durchmischung getaucht, leicht ausgewrungen und im Matthis Labdryer LTE getrocknet.

### A2:

Zur Ausprüfung der Hydrophilie wurde Baumwollwebware (200 g/m²) der Firma wfk Testgewebe GmbH (Christenfeld 10 41379 Brüggen) in einer 0,025 %igen (basierend auf Siliconwirkstoff) Flotte mit einem Flottenverhältnis von 1 zu 120 für 20 min unter leichter Durchmischung getaucht und im Matthis Labdryer LTE getrocknet. Trocknungsbedingungen: Baumwollfrottierware: ca. 14 Min (105 °C Umlufttemperatur, 5 Min Verweilzeit bei 100 °C). Baumwollewirkware: ca. 7 Min (105 °C Umlufttemperatur, 3 Min Verweilzeit bei 100 °C).

### A3:

Eine wie oben beschriebene Zusammensetzung Z4 wurde mit Wasser von 16° dH zu einer Spüllösung verdünnt, die 0,01 Gew.-% an erfindungsgemäßem Produkt enthielt.

Die Baumwolltücher (25 x 9 cm, Baumwollgewebe mit wfl Code 13A, erhältlich bei wfk Testgewebe GmbH Krefeld) wurden 10 min in 100 ml der Spüllösung getaucht. Dabei ist zu beachten, dass die Tücher gleichmäßig von der Spüllösung benetzt werden. Anschließend wurden die Tücher bei Raumtemperatur liegend getrocknet.

### A4:

Baumwollfrottiergewebe von 80 cm auf 50 cm mit einem Flächengewicht von ca. 350 g/m2 wurden zweimal mit Vollwaschpulver bei 95°C gewaschen, zweimal gespült, geschleudert und einlagig auf einer Leine hängend an der Luft getrocknet.

Eine wie oben beschriebene Zusammensetzung Z4 wurde mit kaltem Leitungswasser zu einer Spüllösung verdünnt, die 0,025 Gew.-% an erfindungsgemäßer Verbindung enthielt.

Die Baumwolltücher wurden 10 min in zwei Liter der Spüllösung getaucht. Dabei ist zu beachten, dass die Tücher gleichmäßig von der Spüllösung benetzt werden. Anschließend wurden die Tücher geschleudert und bei Raumtemperatur einlagig auf einer Leine hängend getrocknet. Die behandelten Baumwollfrottiertücher wurden in 10 gleiche Stücke von 16 cm auf 25 cm geschnitten.

### Griffbeurteilung:

### G1:

Zur Beurteilung des Warengriffes wurde ein erfahrenes Team aus 6 Personen zusammengestellt, das die anonymisierten Griffmuster, der mit den Emulsionen ausgerüsteten Wirk- und Frottierwaren, mit Hilfe eines Handpaneltests bewertete. Bei den Griffmustern aus Maschenware wurde zusätzlich eine nicht offensichtlich gekennzeichnete unbehandelte Probe hinzugelegt, welche analog nur mit Wasser behandelt worden war.

Die Qualifizierung fand anhand der Werte +++ exzellent, ++ sehr gut, + gut, o befriedigend, - schlecht statt. Die Ergebnisse sind in den Tabellen 1 und 2 aufgeführt.

### G2:

Zur Beurteilung des Weichgriffes wurde ein erfahrenes Team aus 9 Testpersonen zusammengestellt, das die anonymisierten Griffmuster, der mit den Formulierungen ausgerüsteten Baumwollgewebe, mit Hilfe eines Handpaneltests bewertete. Dabei erhält jede Testperson ein eignes Baumwolltuch. Bei den Griffmustern wurde zusätzlich immer eine nicht offensichtlich gekennzeichnete unbehandelte Probe(Blindwert) hinzugelegt.

Die Beurteilung erfolgte auf einer Skala von 0 (hart und unangenehm im Griff) bis 5 (weich und angenehm im Griff) mit der Möglichkeit zu ganzzahligen Zwischenwerten.

Zur Beurteilung des Weichgriffes wurden die Einzelbewertungen summiert, so dass sich bei 9 Testpersonen ein maximaler Weichgriff von 45 ergeben konnte. Die Ergebnisse sind in Tabelle 4 aufgeführt.

### Prüfung der Hydrophilie:

### H1:

Zur Überprüfung der Hydrophilie wurde die an DIN 53924 angelehnte Prüfmethode zur Messung der Steighöhe von Wasser verwendet. Die Messungen werden immer zu einer Vergleichsprobe durchgeführt und aus diesem Grund wird auf eine klimatisierte Umgebung verzichtet. Es wird immer nur innerhalb einer Messreihe verglichen. Dabei wird das ausgerüstete Baumwolltestgewebe in jeweils fünf 25 cm lange und 1,5 cm breite Streifen geschnitten, mit einem wasserlöslichen Stift seitlich markiert und an einer Halterung senkrecht straff aber ohne Spannung befestigt. Die Halterung wird anschließend für fünf Minuten so in ein Wasserbecken gestellt, dass 2 cm der Streifen ins Wasser eintauchen. Die wasserlösliche Markierung dient der besseren Erkennbarkeit der Steighöhe durch das Verlaufen der Farbe bei Benetzung mit Wasser. Nachdem die Halterung 10 Minuten außerhalb des Wasserbeckens gestanden hat, wird die Steighöhe in cm abgelesen und gegen den Blindwerte (Steighöhe der unbehandelten Baumwollstreifen x cm = 100%) bestimmt und in % vom Blindwert angegeben.

Die Ergebnisse sind in Tabelle 3 angegeben

### H2:

Zur Überprüfung der Hydrophilie wurde die an DIN 53924 angelehnte interne Prüfmethode zur Messung der Steighöhe von Wasser verwendet.

Dazu wurde das ausgerüstete Baumwollgewebe in jeweils fünf 25 cm lange und 1,5 cm breite Streifen geschnitten, mit einem wasserlöslichen Stift markiert und an einer Halterung senkrecht straff aber ohne Spannung befestigt. Die Halterung wurde anschließend für fünf Minuten so in ein Wasserbecken gestellt, dass 2 cm der Streifen ins Wasser eintauchen. Nachdem die Halterung 10 Minuten außerhalb des Wasserbeckens gestanden hat, wurde die Steighöhe in mm abgelesen und gegen den Blindwert (Steighöhe der unbehandelten Baumwollstreifen x mm = 100 %) bestimmt und in % vom Blindwert angegeben.

Die Ergebnisse sind in Tabelle 5 angegeben.

**Tabelle 1: Weichgriffbeurteilung gemäß Beispiel 3 nach Applikation A1 der Zusammensetzungen gemäß Beispiel 2 auf Baumwollwirkware**

| Zusammensetzung | Griffqualität |
|---|---|
| Z2/C3 | ++ |
| Z2/C4 | +++ |
| Z2/C1 | +++ |
| Z3 (TEGO XP 6013) | +++ |
| Unbehandelt | - |

**Tabelle 2: Weichgriffbeurteilung gemäß Beispiel 3 nach Applikation A1 der Zusammensetzungen gemäß Beispiel 2 auf Baumwollfrottierware**

| Zusammensetzung | Griffqualität |
|---|---|
| Z2/C1 | +++ |
| Z2/C3 | ++ |
| Z2/C4 | +++ |
| Z3 (TEGO XP 6013) | +++ |
| Unbehandelt | - |

**Tabelle 3: Bestimmung der Steighöhe gemäß Beispiel 3 nach Applikation A2 der Zusammensetzungen gemäß Beispiel 2 auf Baumwollwebware.**

| Zusammensetzung | Steighöhe in % des Blindwertes |
|---|---|
| Z2/C1 | 90,5 |
| Z2/C3 | 89,7 |
| Z2/C4 | 91,4 |
| Z3 (TEGO XP 6013) | 77,6 |
| Unbehandelt | 100,0 |

Tabelle 1, 2 und 3 zeigen, dass die erfindungsgemäßen Zusammensetzungen enthaltend die erfindungsgemäßen Aminopolyethersiloxane neben einem sehr guten Weichgriff ein verbessertes Rücknetzvermögen und somit eine verbesserte Hydrophilie im Vergleich zu Weichgriffmittel des Standes der Technik erzielen.

**Tabelle 4: Weichgriffbeurteilung gemäß Beispiel 3 nach Applikation A4 der Zusammensetzungen gemäß Beispiel 2 auf Baumwollwirkware**

| Zusammensetzung | Weichgriff |
|---|---|
| Z4/C1 | 32 |
| Z4/C4 | 30 |
| Z5 (REWOQUAT SQ1) | 32 |
| Unbehandelt | 0 |

**Tabelle 5: Bestimmung der Steighöhe gemäß Beispiel 3 nach Applikation A3 der Zusammensetzungen gemäß Beispiel 2 auf Baumwollwebware.**

| Zusammensetzung | Steighöhe in % des Blindwertes |
|---|---|
| Z4/C1 | 88 |
| Z4/C2 | 87 |
| Z4/C4 | 84 |
| Z4/C5 | 94 |
| Z5 (TEGOSIVIN IE 11/59 XP 6013) | 77 |
| Unbehandelt | 100,0 |

Aus den Daten in Tabelle 5 und 4 ist deutlich zu ersehen, dass die erfindungsgemäßen Produkte, neben den verbesserten Rücknetzvermögen einen vergleichbaren Weichgriff gegenüber einem kationischen Silikon als Weichgriffmittel des Standes der Technik aufweisen.

## Patentansprüche

1. Polysiloxan-Polyether-Copolymere mit Amino- und/oder quaternären Ammoniumgruppen im Polyetherteil **dadurch gekennzeichnet, dass** die Amino- und/oder quaternären Ammoniumgruppen über eine Methylengruppe direkt an einen Kohlenstoff der Polyoxyalkylenkette gebunden sind.

2. Polysiloxan-Polyether-Copolymere nach Anspruch 1 **dadurch gekennzeichnet, dass** sie der Formel (1) genügen 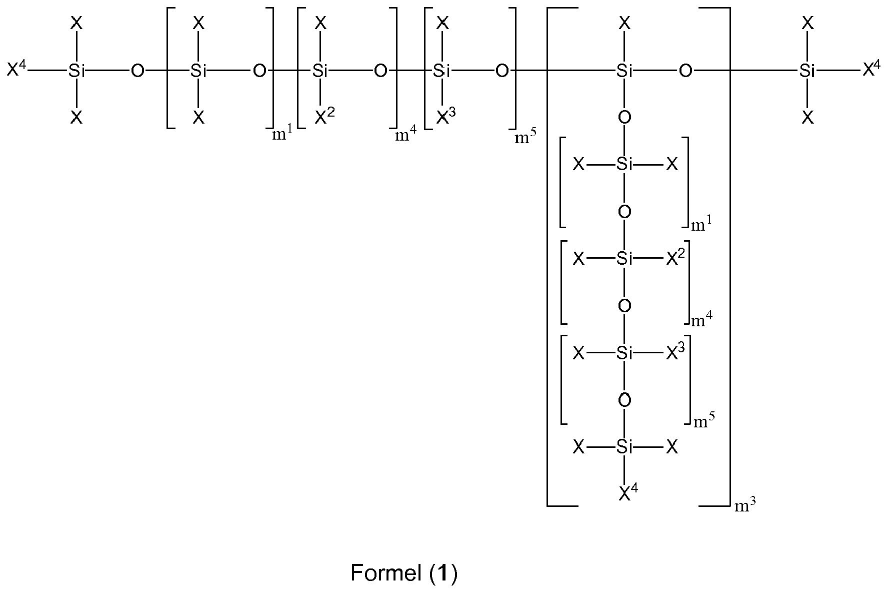 mit
m1 von 0 bis 500, vorzugsweise von 10 bis 200, insbesondere von 15 bis 100,
m3 von 0 bis 30, vorzugsweise von größer 0 bis 15, insbesondere von 1 bis 5,
m4 von 0 bis 60, vorzugsweise von größer 0 bis 30, insbesondere von 1 bis 20,
m5 von 0 bis 60, vorzugsweise von größer 0 bis 30, insbesondere von 1 bis 20,
mit der Maßgabe, dass die Summe der Indizes m1, m3, m4 und m5 mindestens gleich 1 ist,
X unabhängig voneinander ein linearer, cyclischer oder verzweigter, aliphatischer oder aromatischer, gesättigter oder ungesättigter Kohlenwasserstoffrest mit 1 bis 20 C-Atomen ist, der gegebenenfalls Heteroatome wie Sauerstoff, Stickstoff, Phosphor oder Schwefel enthalten kann,
X4 wahlweise X, X2 und/oder X3 ist,
X2 ein Polyetherrest der Formel (1a) ist
-CH₂-CH(Y)-(Z1)ₐ-O-(R¹)ₙ-(R²)ₒ-(R³)ₚ-R⁵ Formel (1a)
wobei
Y entweder Wasserstoff oder ein monovalenter und mindestens ein Kohlenstoffatom aufweisender organischer Rest,
Z1 ein divalenter gesättigter oder ungesättigter organischer Rest,
a gleich 0 oder 1 ist,
n gleich 0 bis 200 ist,
o gleich 1 bis 1000 ist,
p gleich 0 bis 200 ist,
mit der Maßgabe, dass die Summe der Indizes n + o + p mindestens gleich 3 ist,
R¹ = -CH₂CH₂O-
R² = -CH₂CH(CH₃)O- oder -CH(CH₃)CH₂O-
R³ = -CH₂CHRO- oder -CHRCH₂O-
R unabhängig voneinander eine Alkylgruppe mit 2-18 C-Atomen oder ein aromatischer Rest ist,
R⁵ = unabhängig voneinander Wasserstoff, eine Alkylgruppe mit 1-18 C-Atomen oder eine Gruppe R_{E}-C(=O)- ist,
R_{E} unabhängig voneinander eine Alkylgruppe mit 1-17 C-Atomen oder ein aromatischer Rest, insbesondere eine Methyl-, eine Ethyl-, eine Propylgruppe oder ein Phenylrest ist,
X3 ein Polyetherrest der Formel (1 b) ist
-CH₂CH(Y)-(Z1)ₐ-O-(R¹)ₙ-(R²)ₒ-(R³)ₚ-(R⁴)_{q}-R⁵ Formel (1b)
wobei
q gleich 1 bis 50, bevorzugt größer 1 bis 30, insbesondere 2 bis 20 ist,
R⁴ = -CH₂CH(CH₂W)O- oder -CH(CH₂W)CH₂O- ist
und a, n, o, p, R¹, R², R³, R⁵, Y, Z1 die zuvor definierten Bedeutungen haben
wobei W Chlor oder eine Stickstoff aufweisende Gruppe ist,
mit der Maßgabe, dass m5 mindestens 1 ist, wenn X4 ungleich X3 ist.

3. Polysiloxan-Polyether-Copolymere nach Anspruch 2 **dadurch gekennzeichnet, dass** W eine Gruppe ist, die über einen Stickstoff verbunden ist.

4. Polysiloxan-Polyether-Copolymere nach einem der Ansprüche 2 oder 3 **dadurch gekennzeichnet, dass** W der Formel (6) genügt
-N R^{N1}R^{N2} Formel (6)
mit R^{N1} und R^{N2} unabhängig voneinander Wasserstoff, ein linearer, cyclischer oder verzweigter, aliphatischer oder aromatischer, gesättigter oder ungesättigter Kohlenwasserstoffrest mit 1 bis 20 Kohlenstoffatomen, der gegebenenfalls ein oder mehrere Heteroatome enthalten kann, bevorzugte Kohlenwasserstoffe sind lineare Alkylreste mit 1 bis 20, bevorzugt 2 bis 8 und insbesondere bevorzugt mit 3 bis 5 Kohlenstoffatomen, wobei die Alkylreste durch Heteroatome unterbrochen sein können, wobei die Heteroatome vorzugsweise ausgewählt sind aus der Gruppe Sauerstoff, Stickstoff, Phosphor und Schwefel.

5. Polysiloxan-Polyether-Copolymere nach einem der Ansprüche 2 oder 3 **dadurch gekennzeichnet, dass** W der Formel (6) genügt
-NR^{N1}R^{N2} Formel (6)
wobei die Reste R^{N1} und R^{N2} gemeinsam mit dem Stickstoff, an den sie gebunden sind, ein mono-, bi- oder tricyclisches aliphatisches Ringsystem mit 3 bis 10 Ringgliedern bilden, wobei die Ringglieder bildenden Atome ausgewählt sind aus der Gruppe Kohlenstoff, Stickstoff und Sauerstoff.

6. Verfahren zur Herstellung Polysiloxan-Polyether-Copolymere mit Amino- und/oder quaternären Ammoniumgruppen im Polyetherteil mindestens aufweisend einen Schritt (i), in dem mindestens ein Chlormethylgruppenhaltiger terminal ungesättigter Polyether hydrosilyliert wird, einen Schritt (ii), indem die Chloratome durch Aminogruppen eines Stickstoff aufweisenden Restes substituiert werden und optional einen Schritt (iii), indem mindestens ein Stickstoffatom in eine quaternäre Ammoniumgruppe umgewandelt wird.

7. Verfahren nach Anspruch 6 **dadurch gekennzeichnet, dass** im Schritt (i) ein Polyether der Formel (3)
CH₂=C(Y)-(Z)ₐ-O-(R¹)ₙ-(R²)ₒ-(R³)ₚ-(R⁶)_{q}-R⁵ Formel (3)
wobei
a, n, o, p, q, R¹, R², R³, R⁵, Y die zuvor definierten Bedeutungen haben,
Z ein divalenter gesättigter oder ungesättigter organischer Rest,
R⁶ = -CH₂CH(CH₂Cl)O- oder -CH(CH₂Cl)CH₂O- ist
mit der Maßgabe, dass die Summe der Indizes n + o + p + q mindestens gleich 3 ist;
mit mindestens einem Wasserstoffsiloxan der Formel (2) 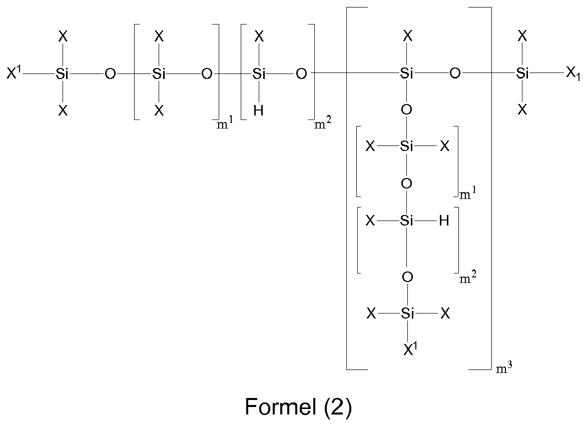 wobei
m1, m3 und X die zuvor definierten Bedeutungen haben
X1 wahlweise X oder H ist,
m2 eine ganze Zahl von 0 bis 60 ist,
mit der Maßgabe, dass m2 mindestens 1 ist, wenn X1 ungleich H ist, unter Verwendung eines die Hydrosilylierung begünstigenden Katalysators umgesetzt wird.

8. Verfahren nach Anspruch 6 **dadurch gekennzeichnet, dass** im Schritt (ii) die Produkte des Schrittes (i) mit mindestens einer Aminverbindung der Formel (6a)
H-N R^{N1}R^{N2} Formel (6a)
wobei R^{N1} und R^{N2} die zuvor definierten Bedeutungen haben, unter Substitution mindestens eines Chloratoms umgesetzt werden.

9. Verfahren nach Anspruch 8 **dadurch gekennzeichnet, dass** die Substitution ohne Eliminierung zu ungesättigten Verbindungen abläuft.

10. Verfahren nach Anspruch 6 **dadurch gekennzeichnet, dass** im Schritt (iii) das Produkt des Schrittes (ii) unter Bildung mindestens einer Ammoniumgruppe weiter umgesetzt wird, wobei die Umsetzung zur Bildung von quaternären Verbindungen führt.

11. Zusammensetzungen enthaltend Polysiloxan-Polyether-Copolymere mit Amino- und/oder quaternären Ammoniumgruppen im Polyetherteil nach einem der Ansprüche 1 bis 5 und/oder der Verfahrensprodukte nach einem der Ansprüche 6 bis 10.

12. Zusammensetzungen nach Anspruch 11 enthaltend weitere Additive und Hilfsstoffe.

13. Verwendung der Zusammensetzungen nach einem der Ansprüche 11 oder 12 als Weichmacher für textile Flächengebilde.

14. Verwendung nach Anspruch 13, **dadurch gekennzeichnet, dass** der Weichmacher den damit behandelten Flächengebilden hydrophile Eigenschaften verleiht.
